(19) Europäisches Patentamt
European Patent Office
Office européen des brevets

(11) EP 3 875 529 B1

(12) EUROPEAN PATENT SPECIFICATION

(45) Date of publication and mention of the grant of the patent:
**26.04.2023 Bulletin 2023/17**

(21) Application number: **21156658.3**

(22) Date of filing: **11.02.2021**

(51) International Patent Classification (IPC):
***C08L 9/00*** *(2006.01)* ***A63B 37/00*** *(2006.01)*

(52) Cooperative Patent Classification (CPC):
**C08L 9/00; A63B 37/0039; A63B 37/004; A63B 37/0043; A63B 37/0051; A63B 37/006; A63B 37/0062; A63B 37/0074; A63B 37/0075;**
A63B 37/0076

(54) **CURED PRODUCT OF GOLF BALL RUBBER COMPOSITION AND GOLF BALL**

GEHÄRTETES PRODUKT AUS GOLFBALLKAUTSCHUKZUSAMMENSETZUNG UND GOLFBALL

PRODUIT DURCI DE COMPOSITION DE CAOUTCHOUC POUR BALLE DE GOLF ET BALLE DE GOLF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2020 JP 2020037235**

(43) Date of publication of application:
**08.09.2021 Bulletin 2021/36**

(73) Proprietor: **Sumitomo Rubber Industries, Ltd.**
**Kobe-shi, Hyogo-ken 651-0072 (JP)**

(72) Inventors:
- **HAYASHI, Kai**
  **Kobe-shi, Hyogo 651-0072 (JP)**
- **SHIGA, Kazuyoshi**
  **Kobe-shi, Hyogo 651-0072 (JP)**
- **SHIGEMITSU, Takahiro**
  **Kobe-shi, Hyogo 651-0072 (JP)**
- **NAGAKURA, Hikaru**
  **Kobe-shi, Hyogo 651-0072 (JP)**
- **KAMINO, Kazuya**
  **Kobe-shi, Hyogo 651-0072 (JP)**
- **INOUE, Hidetaka**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 088 052**
**EP-A1- 3 329 972**
**EP-A1- 3 603 755**
**EP-A2- 3 603 754**
**US-A1- 2012 172 150**
**US-A1- 2012 252 604**
**US-A1- 2016 136 484**
**US-B1- 6 291 592**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 875 529 B1

## Description

### FIELD OF THE INVENTION

The present invention relates to a golf ball rubber composition, and more specifically relates to a technology for improving a core rubber composition of a golf ball.

### DESCRIPTION OF THE RELATED ART

As a material for forming a core of a golf ball, a rubber composition containing a base rubber, a co-crosslinking agent and a crosslinking initiator is widely used in light of its good resilience.

For example, JP 2016-019620 A discloses a golf ball comprising a spherical core and at least one cover layer covering the spherical core, wherein the spherical core is formed from a rubber composition containing (a) a base rubber, (b) an $\alpha,\beta$-unsaturated carboxylic acid having 3 to 8 carbon atoms and/or a metal salt thereof as a co-crosslinking agent, (c) a crosslinking initiator, and (d) a petroleum resin, and further containing (e) a metal compound in case of containing only (b) the $\alpha,\beta$-unsaturated carboxylic acid having 3 to 8 carbon atoms as the co-crosslinking agent.

In addition, JP S63-54181 A discloses a golf ball comprising a core, wherein the core is formed from a viscoelastic material having a resilience (based on JIS K 630) of 40 % or less and an internal loss coefficient tan$\delta$ showing a maximum value of 0.3 or more in a temperature range from 0° to 40 °C, and a constituent material of the core is a rubber composition having an ordinary additive such as a vulcanizing agent, a vulcanization accelerator, a lubricant and a plasticizer, and a large amount of a filler, a softener or a resin such as a petroleum resin and a terpene resin blended in a butyl rubber, an ethylene-propylene-diene terpolymer, a high styrene rubber, an ethylene-propylene rubber, a styrene-butadiene rubber, an acrylonitrilebutadiene rubber or a norbornene polymer.

JP 2008-126062 A discloses a multi-piece golf ball comprising a core composed of at least three layers including a center, an inner core and an outer core, at least one cover layer, and at least one vapor barrier layer realizing a greater vapor transmission rate than the cover layer between the outer core and the at least one cover layer, and the center, the inner core and the outer core show a hardness gradient. JP 2008-126062 A further discloses the vapor barrier layer may contain a terpene resin, a terpene resin ester, or the like.

JP H07-155403 A discloses a golf ball comprising a core formed from a vulcanized molded product of a rubber composition mainly containing a diene-based rubber as a rubber component, and an outer layer mainly containing a synthetic resin, wherein the core has a loss tangent of 0.01 or more and 0.2 or less at the temperature of -50 °C.

Further prior art golf balls and rubber compositions for golf balls are disclosed in the following documents EP 3 603 754 A2, EP 3 603 755 A1, US 2012 / 252 604 A1, EP 3 329 972 A1, US 2016 / 136 484 A1, EP 3 088 052 A1, US 2012/172 150 A1 and US 6 291 592 B1.

### SUMMARY OF THE INVENTION

An object of the present invention is to provide a cured product of a golf ball rubber composition for constituting a golf ball having excellent shot feeling on both driver shots and approach shots. Another object of the present invention is to provide a golf ball having excellent shot feeling on both driver shots and approach shots.

The present invention that has solved the above problem provides a cured product of a golf ball rubber composition, wherein the golf ball rubber composition contains (a) a base rubber, (b) an $\alpha,\beta$-unsaturated carboxylic acid having 3 to 8 carbon atoms and/or a metal salt thereof as a co-crosslinking agent, and (c) a crosslinking initiator, and a product (hardness $\times$ ($\tan\delta_{-80}$ - $\tan\delta_0$)) obtained by multiplying a slab hardness of the cured product of the golf ball rubber composition in Shore C hardness by a difference ($\tan\delta_{-80}$ - $\tan\delta_0$) between a loss tangent of the cured product of the golf ball rubber composition at the temperature of -80 °C ($\tan\delta_{-80}$) and a loss tangent of the cured product of the golf ball rubber composition at the temperature of 0 °C ($\tan\delta_0$) is 28.0 or more, wherein the golf ball rubber composition further contains (d) a hindered phenol-based compound, and wherein the golf ball rubber composition contains (d) the hindered phenol-based compound in an amount ranging from 0.3 part by mass to 5 parts by mass with respect to 100 parts by mass of (a) the base rubber.

If the cured product of the golf ball rubber composition having the product (hardness $\times$ ($\tan\delta_{-80}$ - $\tan\delta_0$)) of 28.0 or more obtained by multiplying the slab hardness of the cured product of the golf ball rubber composition in Shore C hardness by the difference ($\tan\delta_{-80}$ - $\tan\delta_0$) between the loss tangent of the cured product of the golf ball rubber composition at the temperature of -80 °C ($\tan\delta_{-80}$) and the loss tangent of the cured product of the golf ball rubber composition at the temperature of 0 °C ($\tan\delta_0$), is used for a core material of a golf ball, the resultant golf ball has excellent shot feeling on both driver shots and approach shots.

The present invention also provides a golf ball comprising a spherical core and at least one cover layer covering the spherical core, wherein at least a part of the spherical core is composed of a cured product of a golf ball rubber

composition, the golf ball rubber composition contains (a) a base rubber, (b) an α,β-unsaturated carboxylic acid having 3 to 8 carbon atoms and/or a metal salt thereof as a co-crosslinking agent, and (c) a crosslinking initiator, and a product (hardness × ($\tan\delta_{-80}$ - $\tan\delta_0$)) obtained by multiplying a slab hardness of the cured product of the golf ball rubber composition in Shore C hardness by a difference ($\tan\delta_{-80}$ - $\tan\delta_0$) between a loss tangent of the cured product of the golf ball rubber composition at the temperature of -80 °C ($\tan\delta_{-80}$) and a loss tangent of the cured product of the golf ball rubber composition at the temperature of 0 °C ($\tan\delta_0$) is 28.0 or more, wherein the golf ball rubber composition further contains (d) a hindered phenol-based compound, and wherein the golf ball rubber composition contains (d) the hindered phenol-based compound in an amount ranging from 0.3 part by mass to 5 parts by mass with respect to 100 parts by mass of (a) the base rubber.

According to the present invention, a golf ball having excellent shot feeling on both driver shots and approach shots is provided.

## BRIEF DESCRIPTION OF THE DRAWINGS

Fig. 1 is a partially cutaway cross-sectional view of a golf ball according to one embodiment of the present invention; and

Fig. 2 is a partially cutaway cross-sectional view of a golf ball according to one embodiment of the present invention.

## DESCRIPTION OF THE PREFERRED EMBODIMENT

The present invention provides a cured product of a golf ball rubber composition (hereinafter sometimes simply referred to as "cured product"), wherein the golf ball rubber composition contains (a) a base rubber, (b) an α,β-unsaturated carboxylic acid having 3 to 8 carbon atoms and/or a metal salt thereof as a co-crosslinking agent, and (c) a crosslinking initiator, and a product (hardness × ($\tan\delta_{-80}$ - $\tan\delta_0$)) obtained by multiplying a slab hardness of the cured product of the golf ball rubber composition in Shore C hardness by a difference ($\tan\delta_{-80}$ - $\tan\delta_0$) between a loss tangent of the cured product of the golf ball rubber composition at the temperature of -80 °C ($\tan\delta_{-80}$) and a loss tangent of the cured product of the golf ball rubber composition at the temperature of 0 °C ($\tan\delta_0$) is 28.0 or more, wherein the golf ball rubber composition further contains (d) a hindered phenol-based compound, and wherein the golf ball rubber composition contains (d) the hindered phenol-based compound in an amount ranging from 0.3 part by mass to 5 parts by mass with respect to 100 parts by mass of (a) the base rubber.

The reason that the shot feeling on both driver shots and approach shots is excellent if the product (hardness × ($\tan\delta_{-80}$ - $\tan\delta_0$)) of the cured product of the rubber composition is 28.0 or more is considered as follows. With respect to the tanδ of the cured product of the rubber composition, the loss tangent at the temperature of 0 °C ($\tan\delta_0$) greatly affects the shot feeling on approach shots for which the head speed is slow, and the loss tangent at the temperature of -80 °C ($\tan\delta_{-80}$) greatly affects the shot feeling on driver shots for which the head speed is fast. The tanδ of the cured product of the rubber composition, wherein the rubber composition contains (a) the base rubber, (b) the α,β-unsaturated carboxylic acid having 3 to 8 carbon atoms and/or the metal salt thereof as the co-crosslinking agent, and (c) the crosslinking initiator, has a peak temperature of about -90 °C, and both temperatures of -80 °C and 0 °C are higher than the peak temperature. Thus, the greater the difference ($\tan\delta_{-80}$ - $\tan\delta_0$) is, the sharper the peak becomes, and the shot feeling on driver shots is improved while the shot feeling on approach shots is maintained. In addition, when the hardness of the cured product of the rubber composition is high, the tanδ of the cured product of the rubber composition becomes low, and when the hardness of the cured product of the rubber composition is low, the tanδ of the cured product of the rubber composition tends to become high. Therefore, the product obtained by multiplying the hardness by the difference ($\tan\delta_{-80}$ - $\tan\delta_0$)) can be employed as an index of the shot feeling on driver shots and approach shots that is less affected by the hardness.

The product (hardness × ($\tan\delta_{-80}$ - $\tan\delta_0$)) is preferably 28.0 or more, more preferably 28.2 or more, and even more preferably 28.5 or more, and is preferably 40 or less, more preferably 37 or less, and even more preferably 35 or less.

The difference ($\tan\delta_{-80}$ - $\tan\delta_0$) is preferably 0.400 or more, more preferably 0.430 or more, and even more preferably 0.450 or more, and is preferably 0.600 or less, more preferably 0.580 or less, and even more preferably 0.550 or less. If the difference ($\tan\delta_{-80}$ - $\tan\delta_0$) is 0.400 or more, the shot feeling on driver shots is enhanced while the shot feeling on approach shots is maintained, and if the difference ($\tan\delta_{-80}$ - $\tan\delta_0$) is 0.600 or less, the cured product is not excessively soft and thus the resilience is maintained.

The loss tangent of the cured product at the temperature of -80 °C ($\tan\delta_{-80}$) is preferably 0.420 or more, more preferably 0.450 or more, and even more preferably 0.470 or more, and is preferably 0.600 or less, more preferably 0.580 or less, and even more preferably 0.550 or less. If the loss tangent ($\tan\delta_{-80}$) is 0.420 or more, the shot feeling on driver shots is enhanced, and if the loss tangent ($\tan\delta_{-80}$) is 0.600 or less, the cured product is not excessively soft and

thus the resilience is maintained.

The loss tangent of the cured product at the temperature of 0 °C ($\tan\delta_0$) is preferably 0.010 or more, more preferably 0.015 or more, and even more preferably 0.020 or more, and is preferably 0.10 or less, more preferably 0.080 or less, and even more preferably 0.050 or less. If the loss tangent ($\tan\delta_0$) is 0.010 or more and 0.10 or less, the shot feeling on approach shots is enhanced.

The product (hardness $\times$ ($\tan\delta_{-80}$)) obtained by multiplying the slab hardness of the cured product in Shore C hardness by the loss tangent of the cured product at the temperature of -80 °C ($\tan\delta_{-80}$), is preferably 29.0 or more, more preferably 29.5 or more, and even more preferably 30.0 or more, and is preferably 40.0 or less, more preferably 38.0 or less, and even more preferably 35.0 or less. If the product (hardness $\times$ ($\tan\delta_{-80}$)) is 29.0 or more, the shot feeling on driver shots is enhanced, and if the product (hardness $\times$ ($\tan\delta_{-80}$)) is 40.0 or less, the cured product is not excessively soft and thus the resilience is maintained.

The product (hardness $\times$ ($\tan\delta_0$)) obtained by multiplying the slab hardness of the cured product in Shore C hardness by the loss tangent of the cured product at the temperature of 0 °C ($\tan\delta_0$) is preferably 0.6 or more, more preferably 0.9 or more, and even more preferably 1.0 or more, and is preferably 6.0 or less, more preferably 4.8 or less, and even more preferably 2.0 or less. If the product (hardness $\times$ ($\tan\delta_0$)) is 0.6 or more and 6.0 or less, the shot feeling on approach shots is enhanced.

The peak temperature of the loss tangent ($\tan\delta$) of the cured product is preferably -92 °C or more, more preferably -91 °C or more, and even more preferably -90 °C or more, and is preferably -80 °C or less, more preferably -82 °C or less, and even more preferably -85 °C or less. If the peak temperature of the loss tangent is -92 °C or more, the cured product is not excessively soft and thus the resilience is maintained, and if the peak temperature of the loss tangent is -80 °C or less, the durability is maintained.

The slab hardness of the cured product is preferably 50 or more, more preferably 55 or more, and even more preferably 60 or more, and is preferably 90 or less, more preferably 85 or less, and even more preferably 80 or less in Shore C hardness. If the slab hardness is 50 or more in Shore C hardness, the cured product is not excessively soft and thus the resilience is maintained, and if the slab hardness is 90 or less in Shore C hardness, the durability is maintained.

The tensile elastic modulus of the cured product is preferably 0.40 MPa or more, more preferably 0.45 MPa or more, and even more preferably 0.51 MPa or more, and is preferably 5.0 MPa or less, more preferably 3.0 MPa or less, and even more preferably 1.0 MPa or less. If the tensile elastic modulus is 0.40 MPa or more, the cured product is not excessively soft and thus the resilience is maintained, and if the tensile elastic modulus is 5.0 MPa or less, the shot feeling is enhanced.

Next, the materials contained in the golf ball rubber composition will be explained.

[(a) Base rubber]

As (a) the base rubber, a natural rubber and/or a synthetic rubber is used. For example, a polybutadiene rubber, a natural rubber, a polyisoprene rubber, a styrene polybutadiene rubber, or an ethylene-propylene-diene rubber (EPDM) can be used. These rubbers may be used solely, or at least two of these rubbers may be used in combination. Among them, particularly preferred is a high-cis polybutadiene having a cis-1,4 bond in an amount of 40 mass % or more, preferably 80 mass % or more, more preferably 90 mass % or more, and even more preferably 95 mass % or more in view of its superior resilience.

From the viewpoint of obtaining a core having greater resilience, the amount of the high-cis polybutadiene in the base rubber is preferably 60 mass % or more, more preferably 80 mass % or more, and even more preferably 90 mass % or more. It is also preferable that (a) the base rubber consists of the high-cis polybutadiene.

The high-cis polybutadiene preferably has a 1,2-vinyl bond in an amount of 2.0 mass % or less, more preferably 1.7 mass % or less, and even more preferably 1.5 mass % or less. If the amount of the 1,2-vinyl bond is excessively high, the resilience may be lowered.

The high-cis polybutadiene preferably includes a polybutadiene synthesized using a rare earth element catalyst. When a neodymium catalyst, which employs a neodymium compound that is a lanthanum series rare earth element compound, is used, a polybutadiene rubber having a high content of a cis-1,4 bond and a low content of a 1,2-vinyl bond is obtained with excellent polymerization activity. Such a polybutadiene rubber is particularly preferred.

The high-cis polybutadiene preferably has a Mooney viscosity ($ML_{1+4}$ (100 °C)) of 30 or more, more preferably 32 or more, and even more preferably 35 or more, and preferably has a Mooney viscosity ($ML_{1+4}$ (100 °C)) of 140 or less, more preferably 120 or less, even more preferably 100 or less, and most preferably 55 or less. It is noted that the Mooney viscosity ($ML_{1+4}$ (100 °C)) in the present invention is a value measured according to JIS K6300 using an L rotor under the conditions of: a preheating time of 1 minute; a rotor revolution time of 4 minutes; and a temperature of 100 °C.

The high-cis polybutadiene preferably has a molecular weight distribution Mw/Mn (Mw: weight average molecular weight, Mn: number average molecular weight) of 2.0 or more, more preferably 2.2 or more, even more preferably 2.4 or more, and most preferably 2.6 or more, and preferably has a molecular weight distribution Mw/Mn of 6.0 or less,

more preferably 5.0 or less, even more preferably 4.0 or less, and most preferably 3.4 or less. If the molecular weight distribution (Mw /Mn) of the high-cis polybutadiene is excessively low, the processability deteriorates, and if the molecular weight distribution (Mw/Mn) of the high-cis polybutadiene is excessively high, the resilience may be lowered. It is noted that the measurement of the molecular weight distribution is conducted by gel permeation chromatography ("HLC-8120GPC", available from Tosoh Corporation) using a differential refractometer as a detector under the conditions of column: GMHHXL (available from Tosoh Corporation), column temperature: 40 °C, and mobile phase: tetrahydrofuran, and calculated by converting based on polystyrene standard.

[(b) Co-crosslinking agent]

(b) The α,β-unsaturated carboxylic acid having 3 to 8 carbon atoms and/or the metal salt thereof used in the rubber composition is blended as a co-crosslinking agent in the rubber composition, and has an action of crosslinking a rubber molecule by graft polymerization to a base rubber molecular chain.

Examples of the α,β-unsaturated carboxylic acid having 3 to 8 carbon atoms include acrylic acid, methacrylic acid, fumaric acid, maleic acid and crotonic acid.

Examples of the metal component constituting the metal salt of the α,β-unsaturated carboxylic acid having 3 to 8 carbon atoms include a monovalent metal ion such as sodium, potassium and lithium; a divalent metal ion such as magnesium, calcium, zinc, barium and cadmium; a trivalent metal ion such as aluminum; and other metal ion such as tin and zirconium. The above metal component may be used solely or as a mixture of at least two of them. Among them, the divalent metal ion such as magnesium, calcium, zinc, barium and cadmium is preferably used as the metal component. This is because if the divalent metal salt of the α,β-unsaturated carboxylic acid having 3 to 8 carbon atoms is used, a metal crosslinking easily generates between the rubber molecules. Especially, as the divalent metal salt, zinc acrylate is preferable, because use of zinc acrylate enhances the resilience of the obtained golf ball. It is noted that the α,β-unsaturated carboxylic acid having 3 to 8 carbon atoms and/or the metal salt thereof may be used solely or as a mixture of at least two of them.

The amount of (b) the α,β-unsaturated carboxylic acid having 3 to 8 carbon atoms and/or the metal salt thereof is preferably 15 parts by mass or more, more preferably 17 parts by mass or more, and even more preferably 20 parts by mass or more, and is preferably 60 parts by mass or less, more preferably 55 parts by mass or less, and even more preferably 50 parts by mass or less, with respect to 100 parts by mass of (a) the base rubber. If the amount of (b) the α,β-unsaturated carboxylic acid having 3 to 8 carbon atoms and/or the metal salt thereof is less than 15 parts by mass, the amount of (c) the crosslinking initiator which will be described later must be increased such that the cured product (e.g. core) formed from the rubber composition has an appropriate hardness, which tends to lower the resilience of the obtained golf ball. On the other hand, if the amount of (b) the α,β-unsaturated carboxylic acid having 3 to 8 carbon atoms and/or the metal salt thereof is more than 60 parts by mass, the cured product (e.g. core) formed from the rubber composition becomes so hard that the shot feeling of the obtained golf ball may be lowered.

[(c) Crosslinking initiator]

(c) The crosslinking initiator used in the rubber composition is blended to crosslink (a) the base rubber component. As (c) the crosslinking initiator, an organic peroxide is suitable. Specific examples of the organic peroxide include dicumyl peroxide, 1,1-bis(t-butylperoxy)-3,3,5-trimethylcyclohexane, 2,5-dimethyl-2,5-di(t-butylperoxy)hexane, and di-t-butylperoxide. These organic peroxides may be used solely or as a mixture of at least two of them. Among them, dicumyl peroxide is preferably used.

In the case that the rubber composition contains the following component (d), the amount of (c) the crosslinking initiator is preferably 0.1 part by mass or more, more preferably 0.2 part by mass or more, and even more preferably 0.3 part by mass or more, and is preferably 4 parts by mass or less, more preferably 2 parts by mass or less, and even more preferably 1.5 parts by mass or less, with respect to 100 parts by mass of (a) the base rubber. If the amount of the crosslinking initiator is less than 0.1 part by mass, the cured product (e.g. core) formed from the rubber composition is so soft that the resilience of the obtained golf ball tends to be lowered, and if the amount of the crosslinking initiator is more than 4 parts by mass, the amount of (b) the co-crosslinking agent described above must be decreased such that the cured product (e.g. core) formed from the rubber composition has an appropriate hardness, which tends to lower the resilience or worsen the hitting durability of the obtained golf ball.

In the case that the rubber composition does not contain the following component (d), the amount of (c) the crosslinking initiator is also preferably 0.1 part by mass or less with respect to 100 parts by mass of (a) the base rubber. If the amount of (c) the crosslinking initiator is 0.1 part by mass or less with respect to 100 parts by mass of (a) the base rubber, the hitting durability is enhanced.

[(d) Radical scavenger]

The rubber composition preferably contains (d) a radical scavenger. Examples of (d) the radical scavenger include (d1) a hindered phenol-based compound and (d2) a hindered amine-based compound. If the rubber composition contains the component (d), the shot feeling on driver shots is enhanced.

(d1) Hindered phenol-based compound

(d1) The hindered phenol-based compound is a compound having a hydroxyphenyl structure with a hydroxy group thereof being sterically protected by a bulky functional group. The bulky functional group preferably exists at a location adjacent to the hydroxy group. Examples of the bulky functional group include t-butyl group, and a long chain alkyl group optionally having a part of the carbon atoms thereof substituted with a sulfur atom. As (d1) the hindered phenol-based compound, a compound having a tert-butylhydroxyphenyl structure with at least one tert-butyl group is preferable, a compound having a di-tert-butylhydroxyphenyl structure with two tert-butyl groups is more preferable.
Examples of the compound having the tert-butylhydroxyphenyl structure with at least one tert-butyl group include compounds having a structure such as 3-tert-butyl-4-hydroxyphenyl or 3,5-di-tert-butyl-4-hydroxyphenyl. Among them, the compound having 3,5-di-tert-butyl-4-hydroxyphenyl structure is preferable.
Specific examples of (d1) the hindered phenol-based compound include a compound having one hydroxyphenyl structure, such as dibutylhydroxy toluene (BHT), 4,6-bis(octylthiomethyl)-o-cresol, 4,6-bis[(dodecylthio)methyl]-o-cresol, 2,4-dimethyl-6-(1-methylpentadecyl) phenol (e.g. Irganox (registered trademark) 1141 available from BASF Japan Ltd.), and octadecyl-3-(3,5-di-t-butyl-4-hydroxyphenyl) propionate (e.g. ADK STAB (registered trademark) AO-50 available from Adeka Corporation).
Other specific examples of (d1) the hindered phenol-based compound include a compound having two hydroxyphenyl structures, such as 2,2'-methylene bis(4-ethyl-6-tert-butylphenol) (e.g. YOSHINOX (registered trademark) 425 available from Mitsubishi Chemical Corporation), 2,2'-methylene bis(4-methyl-6-tert-butylphenol) (e.g. Sandant (registered trademark) 2246 available from Sanshin Chemical Industry Co., Ltd.), 4,4'-butylidene bis(3-methyl-6-tert-butylphenol) (e.g. YOSHINOX BB available from Mitsubishi Chemical Corporation), 4,4'-thiobis(3-methyl-6-tertbutylphenol) (e.g. NOCRAC (registered trademark) 300 available from Ouchi Shinko Chemical Industrial Co., Ltd.), 4,4-methylene bis(2,6-di-tert-butylphenol), 2,6-di-tert-butyl-4-({2-[(3,5-di-tert-butyl-4-hydroxyphenyl) sulfanyl] propane-2-yl} sulfanyl) phenol (probucol), and 3,9-bis[2-[3-(3-tert-butyl-4-hydroxy-5-methylphenyl) propionyloxy]-1,1-dimethylethyl]-2,4,8,10-tetraoxaspiro[5.5] undecane (e.g. ADK STAB AO-80 available from Adeka Corporation).
Other specific examples of (d1) the hindered phenol-based compound include a compound having three hydroxyphenyl structures, such as 1,3,5-tris-(3,5-di-tert-butyl-4-hydroxybenzyl)-1,3-5-triazine-2,4,6(1H,3H,5H-)-trione (e.g. ADK STAB AO-20 available from Adeka Corporation), and 1,3,5-trimethyl-2,4,6-tris(3,5-di-t-butyl-4-hydroxybenzyl) benzene (e.g. ADK STAB AO330 available from Adeka Corporation).
Other specific examples of (d1) the hindered phenol-based compound include a compound having four hydroxyphenyl structures, such as pentaerythritol tetrakis[3-(3,5-di-tert-butyl-4-hydroxyphenyl) propionate] (e.g. ADK STAB AO-60 available from Adeka Corporation).
(d1) The hindered phenol-based compound may be used solely, or two or more of them may be used in combination.
As (d1) the hindered phenol-based compound, at least one member selected from the group consisting of dibutylhydroxy toluene, octadecyl-3-(3,5-di-tert-butyl-4-hydroxyphenyl) propionate, 4,4'-methylene bis(2,6-di-tert-butylphenol), 2,6-di-tert-butyl-4-({2-[(3,5-di-tert-butyl-4-hydroxyphenyl) sulfanyl] propane-2-yl} sulfanyl) phenol, 1,3,5-tris(3,5-di-tert-butyl-4-hydroxybenzyl)-1,3,5-triazine-2,4,6-(1H,3H,5H)-trione, and pentaerythritol tetrakis[3-(3,5-di-tert-butyl-4-hydroxyphenyl) propionate is preferable.

(d2) Hindered amine-based compound

As (d2) the hindered amine-based compound, a compound having 2,2,6,6-tetramethyl-4-piperidyl group represented by the following chemical formula (1) is preferable.

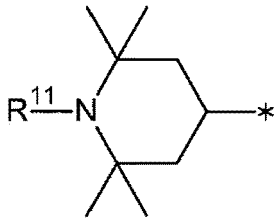

(1)

[In the formula (1), $R^{11}$ is a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical; and * is a bonding hand.]

The hindered amine-based compound represented by the chemical formula (1) includes a hindered amine-based compound represented by the chemical formula (2) or chemical formula (3).

The hindered amine-based compound represented by the following chemical formula (2) is a so-called N-alkyl type hindered amine-based compound or NH type hindered amine-based compound.

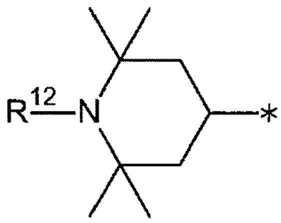

(2)

[In the formula (2), $R^{12}$ is a hydrogen atom, a hydroxy group, an alkyl group having 1 to 30 carbon atoms, a hydroxyalkyl group having 1 to 30 carbon atoms, or an oxyradical; and * is a bonding hand.]

The hindered amine-based compound represented by the following chemical formula (3) is a so-called N-alkoxy type hindered amine compound.

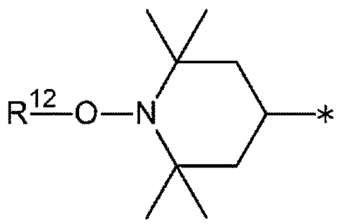

(3)

[In the chemical formula (3), $R^{12}$ is an alkyl group having 1 to 30 carbon atoms or a hydroxyalkyl group having 1 to 30 carbon atoms; and * is a bonding hand.]

Specific examples of (d2) the hindered amine-based compound include compounds represented by the chemical formulae (4) to (5).

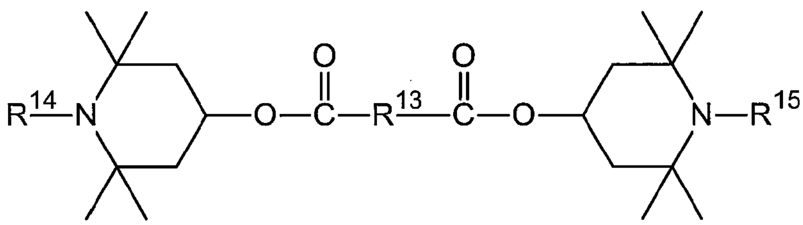

(4)

[In the chemical formula (4), $R^{14}$ and $R^{15}$ are each independently a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical. $R^{13}$ is an alkylene group having 1 to 30 carbon atoms.]

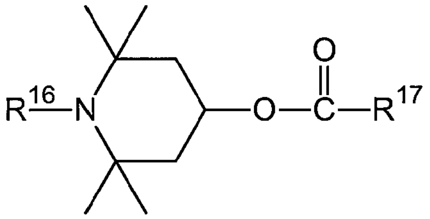

(5)

[In the chemical formula (5), $R^{16}$ is a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical. $R^{17}$ is an alkyl group having 1 to 30 carbon atoms, or an alkenyl group having 2 to 30 carbon atoms.]

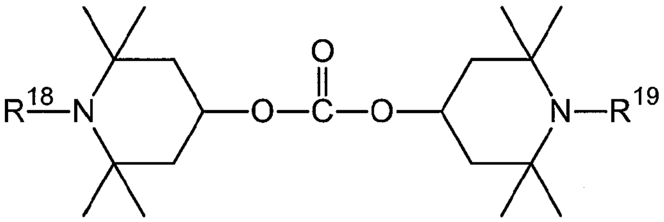

(6)

[In the chemical formula (6), $R^{18}$ and $R^{19}$ are each independently a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical.]

Specific examples of (d2) the hindered amine-based compound include ADK STAB LA-52 (tetrakis(1,2,2,6,6-pentamethyl-4-piperidyl) butane-1,2,3,4-tetracarboxylate), ADK STAB LA-57 (tetrakis(2,2,6,6-tetramethyl-4-piperidyl) butane-1,2,3,4-tetracarboxylate), ADK STAB LA-63P, ADK STAB LA-68, ADK STAB LA-72 (bis(1,2,2,6,6-pentamethyl-4-piperidyl) sebacate, ADK STAB LA-77Y (bis(2,2,6,6-tetramethyl-4-piperidyl) sebacate, and ADK STAB LA-81 (bis(1-undecanoxy-2,2,6,6-tetramethylpiperidine-4-yl) carbonate available from Adeka Corporation.

Specific examples of (d2) the hindered amine-based compound include the following products available from BASF Japan Ltd.

1) Chimassorb (registered trademark) 2020FDL
1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine
(2) Chimassorb 944FDL
Poly[[6-[(1,1,3,3-tetramethylbutyl) amino]-1,3,5-triazine-2,4-diyl][(2,2,6,6-tetramethyl-4-piperidinyl) imino]-1,6-hexanediyl[(2,2,6,6-tetramethyl-4-piperidinyl) imino]])
3) TINUVIN (registered trademark) 622SF
Butanedioic acid, dimethylester, polymer with 4-hydroxy-2,2,6,6-tetramethyl-1-piperidine ethanol)
4) TINUVIN PA144
Bis(1,2,2,6,6-pentamethyl-4-piperidinyl)-2-butyl-2-(4-hydroxy-3,5-di-tert-butylbenzyl) propanedioate

(d2) The hindered amine-based compound may be used solely, or two or more of them may be used in combination. In addition, (d1) the hindered phenol-based compound and (d2) the hindered amine-based compound may be used in combination.

The amount of (d) the radical scavenger is 0.3 part by mass or more, and even more preferably 0.5 part by mass or more, and is 5 parts by mass or less, more preferably 4 parts by mass or less, and even more preferably 3 parts by mass or less, with respect to 100 parts by mass of (a) the base rubber. If the amount of (d) the radical scavenger falls within the above range, the shot feeling on both driver shots and approach shots is excellent.

[(e) Organic sulfur compound]

The rubber composition may further contain (e) an organic sulfur compound. If (e) the organic sulfur compound is contained, the obtained core has enhanced resilience.

As (e) the organic sulfur compound, at least one compound selected from the group consisting of thiols (thiophenols, thionaphthols), polysulfides, thiurams, thiocarboxylic acids, dithiocarboxylic acids, sulfenamides, dithiocarbamates, and thiazoles, is preferable.

Examples of the thiols include thiophenols and thionaphthols. Examples of the thiophenols include thiophenol; thiophenols substituted with a fluoro group, such as 4-fluorothiophenol, 2,4-difluorothiophenol, 2,5-difluorothiophenol, 2,6-difluorothiophenol, 2,4,5-trifluorothiophenol, 2,4,5,6-tetrafluorothiophenol, and pentafluorothiophenol; thiophenols substituted with a chloro group, such as 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol, and pentachlorothiophenol; thiophenols substituted with a bromo group, such as 4-bromothiophenol, 2,4-dibromothiophenol, 2,5-dibromothiophenol, 2,6-dibromothiophenol, 2,4,5-tribromothiophenol, 2,4,5,6-tetrabromothiophenol, and pentabromothiophenol; thiophenols substituted with an iodo group, such as 4-iodothiophenol, 2,4-diiodothiophenol, 2,5-diiodothiophenol, 2,6-diiodothiophenol, 2,4,5-triiodothiophenol, 2,4,5,6-tetraiodothiophenol, and pentaiodothiophenol; and metal salts thereof. As the metal salt, zinc salt is preferable.

Examples of the thionaphthols (naphthalenethiols) include 2-thionaphthol, 1-thionaphthol, 1-chloro-2-thionaphthol, 2-chloro-1-thionaphthol, 1-bromo-2-thionaphthol, 2-bromo-1-thionaphthol, 1-fluoro-2-thionaphthol, 2-fluoro-1-thionaphthol, 1-cyano-2-thionaphthol, 2-cyano-1-thionaphthol, 1-acetyl-2-thionaphthol, 2-acetyl-1-thionaphthol, and metal salts thereof. Among them, 2-thionaphthol, 1-thionaphthol, and metal salts thereof are preferable. As the metal salt, a divalent metal salt is preferable, zinc salt is more preferable. Specific examples of the metal salt include zinc salt of 1-thionaphthol and zinc salt of 2-thionaphthol.

The polysulfides are organic sulfur compounds having a polysulfide bond, and examples thereof include disulfides, trisulfides, and tetrasulfides. As the polysulfides, diphenyl polysulfides are preferable.

Examples of the diphenyl polysulfides include diphenyl disulfide; diphenyl disulfides substituted with a halogen group, such as bis(4-fluorophenyl) disulfide, bis(2,5-difluorophenyl) disulfide, bis(2,6-difluorophenyl) disulfide, bis(2,4,5-trifluorophenyl) disulfide, bis(2,4,5,6-tetrafluorophenyl) disulfide, bis(pentafluorophenyl) disulfide, bis(4-chlorophenyl) disulfide, bis(2,5-dichlorophenyl) disulfide, bis(2,6-dichlorophenyl) disulfide, bis(2,4,5-trichlorophenyl) disulfide, bis(2,4,5,6-tetrachlorophenyl) disulfide, bis(pentachlorophenyl) disulfide, bis(4-bromophenyl) disulfide, bis(2,5-dibromophenyl) disulfide, bis(2,6-dibromophenyl) disulfide, bis(2,4,5-tribromophenyl) disulfide, bis(2,4,5,6-tetrabromophenyl) disulfide, bis(pentabromophenyl) disulfide, bis(4-iodophenyl) disulfide, bis(2,5-diiodophenyl) disulfide, bis(2,6-diiodophenyl) disulfide, bis(2,4,5-triiodophenyl) disulfide, bis(2,4,5,6-tetraiodophenyl) disulfide and bis(pentaiodophenyl) disulfide; and diphenyl disulfides substituted with an alkyl group, such as bis(4-methylphenyl) disulfide, bis(2,4,5-trimethylphenyl) disulfide, bis(pentamethylphenyl) disulfide, bis(4-t-butylphenyl) disulfide, bis(2,4,5-tri-t-butylphenyl) disulfide, and bis(penta-t-butylphenyl) disulfide.

Examples of the thiurams include thiuram monosulfides such as tetramethylthiuram monosulfide; thiuram disulfides such as tetramethylthiuram disulfide, tetraethylthiuram disulfide and tetrabutylthiuram disulfide; and thiuram tetrasulfides such as dipentamethylenethiuram tetrasulfide. Examples of the thiocarboxylic acids include naphthalene thiocarboxylic acid. Examples of the dithiocarboxylic acids include naphthalene dithiocarboxylic acid. Examples of the sulfenamides include N-cyclohexyl-2-benzothiazole sulfenamide, N-oxydiethylene-2-benzothiazole sulfenamide, and N-t-butyl-2-benzothiazole sulfenamide.

As (e) the organic sulfur compound, the thiophenols and/or the metal salts thereof, the thionaphthols and/or the metal salts thereof, the diphenyl disulfides, and the thiuram disulfides are preferable, 2,4-dichlorothiophenol, 2,6-difluorothiophenol, 2,6-dichlorothiophenol, 2,6-dibromothiophenol, 2,6-diiodothiophenol, 2,4,5-trichlorothiophenol, pentachlorothiophenol, 1-thionaphthol, 2-thionaphthol, diphenyl disulfide, bis(2,6-difluorophenyl) disulfide, bis(2,6-dichlorophenyl) disulfide, bis(2,6-dibromophenyl) disulfide, bis(2,6-diiodophenyl) disulfide, and

bis(pentabromophenyl) disulfide are more preferable.

(e) The organic sulfur compound may be used solely, or two or more of them may be used in combination.

The amount of (e) the organic sulfur compound is preferably 0.05 part by mass or more, more preferably 0.1 part by mass or more, and even more preferably 0.2 part by mass or more, and is preferably 5.0 parts by mass or less, more preferably 3.0 parts by mass or less, and even more preferably 2.0 parts by mass or less, with respect to 100 parts by mass of (a) the base rubber. If the amount of (e) the organic sulfur compound is less than 0.05 part by mass, the effect of adding (e) the organic sulfur compound may not be obtained, and the resilience of the golf ball may not be enhanced. In addition, if the amount of (e) the organic sulfur compound is more than 5.0 parts by mass, the obtained golf ball has a great compression deformation amount and thus the resilience thereof may be lowered.

[(f) Other component]

The golf ball rubber composition preferably further contains a metal compound. The metal compound is used as a neutralizing agent for the $\alpha,\beta$-unsaturated carboxylic acid having 3 to 8 carbon atoms.

Examples of the metal compound include a metal hydroxide such as magnesium hydroxide, zinc hydroxide, calcium hydroxide, sodium hydroxide, lithium hydroxide, potassium hydroxide, and copper hydroxide; a metal oxide such as magnesium oxide, calcium oxide, zinc oxide, and copper oxide; and a metal carbonate such as magnesium carbonate, zinc carbonate, calcium carbonate, sodium carbonate, lithium carbonate, and potassium carbonate. As the metal compound, the divalent metal compound is preferable, the zinc compound is more preferable. This is because the divalent metal compound reacts with the $\alpha,\beta$-unsaturated carboxylic acid having 3 to 8 carbon atoms to form a metal crosslinking. In addition, if the zinc compound is used, the obtained golf ball has better resilience.

The metal compound may be used solely, or at least two of them may be used in combination. In addition, the amount of the metal compound may be appropriately adjusted according to the desired neutralization degree of (b) the $\alpha,\beta$-unsaturated carboxylic acid having 3 to 8 carbon atoms.

The golf ball rubber composition may further contain an additive such as a pigment, a filler for adjusting weight or the like, a peptizing agent, and a softener, where necessary.

The filler blended in the rubber composition is mainly used as a weight adjusting agent for adjusting the weight of the golf ball obtained as a final product, and may be blended where necessary. Examples of the filler include an inorganic filler such as zinc oxide, barium sulfate, calcium carbonate, magnesium oxide, tungsten powder, and molybdenum powder. As the filler, zinc oxide is particularly preferable. It is considered that zinc oxide acts as a vulcanizing aid to increase the hardness of the cured product (e.g. the core as a whole).

The amount of the filler is preferably 0.5 part by mass or more, more preferably 1.0 part by mass or more, and is preferably 30 parts by mass or less, more preferably 25 parts by mass or less, and even more preferably 20 parts by mass or less with respect to 100 parts by mass of (a) the base rubber. If the amount of the filler is less than 0.5 part by mass, it is difficult to adjust the weight, and if the amount of the filler is more than 30 parts by mass, the weight proportion of the rubber component is decreased and thus the resilience tends to be lowered.

The amount of the peptizing agent is preferably 0.1 part by mass or more and 5 parts by mass or less with respect to 100 parts by mass of (a) the base rubber.

The above cured product of the golf ball rubber composition may be used as any portion of the constituent member of the golf ball. For example, the above cured product of the golf ball rubber composition can be suitably used as a one-piece golf ball body, a core, or an intermediate layer. Among them, the above cured product of the golf ball rubber composition can be suitably used as a single layered core, or an inner core layer and/or outer core layer of a dual layered core composed of the inner core layer and the outer core layer.

The golf ball rubber composition is obtained by mixing and kneading (a) the base rubber, (b) the co-crosslinking agent, (c) the crosslinking initiator, and other optional components used where necessary. The kneading method is not particularly limited. For example, the kneading is conducted with a conventional kneading machine such as a kneading roll, a banbury mixer and a kneader.

[Golf ball]

The present invention also provides a golf ball having a constituent member wherein at least a part of the constituent member is composed of the above cured product of the golf ball rubber composition. The golf ball preferably has a spherical core and at least one cover layer covering the spherical core. The spherical core may be single layered or have a multiple layered construction composed of two or more layers.

In the case that a part of the core is composed of the above cured product of the golf ball rubber composition, the core surface preferably satisfies the above hardness, loss tangent ($\tan\delta$) and tensile elastic modulus. Specifically, a region having a thickness of 0.5 mm from the core surface preferably satisfies the above hardness, loss tangent ($\tan\delta$) and tensile elastic modulus. It is noted that the properties of the cured product for forming the core surface can be confirmed by cutting a test piece from the core. In addition, the properties of the cured product for forming the core surface can also be confirmed by evaluating a slab prepared from the rubber composition used to form the core under same conditions as conditions when molding the core.

[Core rubber composition]

In the case that the spherical core is multiple layered, at least one layer of the multiple layered core is preferably composed of the cured product of the golf ball rubber composition. In addition, all the layers of the multiple layered core may be composed of the cured product of the golf ball rubber composition. In the case that the spherical core is the multiple layered core, a layer other than the layer formed from the cured product of the golf ball rubber composition may be formed from a core rubber composition used in a conventional golf ball core.

Example of the core rubber composition include a core rubber composition containing a base rubber, an $\alpha,\beta$-unsaturated carboxylic acid having 3 to 8 carbon atoms and/or a metal salt thereof as a co-crosslinking agent, and a crosslinking initiator. The core rubber composition may optionally contain a carboxylic acid and/or a salt thereof, a metal

compound, an organic sulfur compound, and an additive. It is noted that, as the base rubber, the α,β-unsaturated carboxylic acid having 3 to 8 carbon atoms and/or the metal salt thereof as the co-crosslinking agent, the crosslinking initiator, the metal compound, the organic sulfur compound, and the additive, those listed for the above golf ball rubber composition can be used.

[Cover composition]

The cover is formed from a cover composition containing a resin component. Examples of the resin component include an ionomer resin, a thermoplastic polyurethane elastomer having a trade name of "Elastollan (registered trademark)" available from BASF Japan Ltd., a thermoplastic polyamide elastomer having a trade name of "Pebax (registered trademark)" available from Arkema K. K., a thermoplastic polyester elastomer having a trade name of "Hytrel (registered trademark)" available from Du Pont-Toray Co., Ltd., and a thermoplastic styrene elastomer having a trade name of "TEFABLOC (registered trademark)" available from Mitsubishi Chemical Corporation.

Examples of the ionomer resin include a product obtained by neutralizing at least a part of carboxyl groups in a binary copolymer composed of an olefin and an α,β-unsaturated carboxylic acid having 3 to 8 carbon atoms with a metal ion; a product obtained by neutralizing at least a part of carboxyl groups in a ternary copolymer composed of an olefin, an α,β-unsaturated carboxylic acid having 3 to 8 carbon atoms and an α,β-unsaturated carboxylic acid ester with a metal ion; and a mixture thereof. The olefin is preferably an olefin having 2 to 8 carbon atoms. Examples of the olefin include ethylene, propylene, butene, pentene, hexene, heptene and octene, and ethylene is particularly preferred. Examples of the α,β-unsaturated carboxylic acid having 3 to 8 carbon atoms include acrylic acid, methacrylic acid, fumaric acid, maleic acid and crotonic acid, and acrylic acid or methacrylic acid is particularly preferred. In addition, examples of the α,β-unsaturated carboxylic acid ester include methyl ester, ethyl ester, propyl ester, n-butyl ester, isobutyl ester of acrylic acid, methacrylic acid, fumaric acid and maleic acid, and acrylic acid ester or methacrylic acid ester is particularly preferred. Among them, as the ionomer resin, a metal ion neutralized product of ethylene-(meth)acrylic acid binary copolymer or a metal ion neutralized product of ethylene-(meth)acrylic acid-(meth)acrylic acid ester ternary copolymer is preferred.

Specific examples of the ionomer resin include trade name "Himilan (registered trademark) (e.g. a binary copolymerized ionomer resin such as Himilan 1555 (Na), Himilan 1557 (Zn), Himilan 1605 (Na), Himilan 1706 (Zn), Himilan 1707 (Na), and Himilan AM3711 (Mg); and a ternary copolymerized ionomer resin such as Himilan 1856 (Na), and Himilan 1855 (Zn))" available from Dow-Mitsui Polychemicals Co., Ltd.

Further, examples of the ionomer resin include "Surlyn (registered trademark) (e.g. a binary copolymerized ionomer resin such as Surlyn 8945 (Na), Surlyn 9945 (Zn), Surlyn 8140 (Na), Surlyn 8150 (Na), Surlyn 9120 (Zn), Surlyn 9150 (Zn), Surlyn 6910 (Mg), Surlyn 6120 (Mg), Surlyn 7930 (Li), Surlyn 7940 (Li), and Surlyn AD8546 (Li); and a ternary copolymerized ionomer resin such as Surlyn 8120 (Na), Surlyn 8320 (Na), Surlyn 9320 (Zn), Surlyn 6320 (Mg), HPF 1000 (Mg), and HPF 2000 (Mg))" available from E.I. du Pont de Nemours and Company.

In addition, examples of the ionomer resin include "Iotek (registered trademark) (e.g. a binary copolymerized ionomer resin such as Iotek 8000 (Na), Iotek 8030 (Na), Iotek 7010 (Zn), and Iotek 7030 (Zn); and a ternary copolymerized ionomer resin such as Iotek 7510 (Zn), and Iotek 7520 (Zn))" available from ExxonMobil Chemical Corporation.

It is noted that Na, Zn, Li, Mg, or the like described in the parenthesis after the trade name of the ionomer resin indicates a metal type of the neutralizing metal ion for the ionomer resin. The ionomer resin may be used solely, or a mixture of at least two of them may be used.

The cover composition for forming the cover preferably contains a thermoplastic polyurethane elastomer or an ionomer resin as the resin component. It is also preferred that when the ionomer resin is used, a thermoplastic styrene elastomer is used in combination. The amount of the polyurethane or ionomer resin in the resin component of the cover composition is preferably 50 mass % or more, more preferably 60 mass % or more, and even more preferably 70 mass % or more.

In addition to the resin component, the cover composition may further contain a pigment component such as a white pigment (e.g. titanium oxide), a blue pigment and a red pigment, a weight adjusting agent such as zinc oxide, calcium carbonate and barium sulfate, a dispersant, an antioxidant, an ultraviolet absorber, a light stabilizer, a fluorescent material or fluorescent brightener, as long as they do not impair the performance of the cover.

The amount of the white pigment (e.g. titanium oxide) is preferably 0.5 part or more, more preferably 1 part or more, and is preferably 10 parts or less, more preferably 8 parts or less, with respect to 100 parts by mass of the resin component constituting the cover. If the amount of the white pigment is 0.5 part by mass or more, it is possible to impart the opacity to the resultant cover. In addition, if the amount of the white pigment is more than 10 parts by mass, the durability of the resultant cover may deteriorate.

The slab hardness of the cover composition is preferably set in accordance with the desired performance of the golf ball. For example, in case of a so-called distance golf ball which focuses on a flight distance, the cover composition preferably has a slab hardness of 50 or more, more preferably 55 or more, and even more preferably 60 or more in

shore D hardness, and preferably has a slab hardness of 80 or less, more preferably 70 or less, and even more preferably 68 or less in shore D hardness. If the cover composition has a slab hardness of 50 or more, the obtained golf ball has a higher launch angle and a lower spin rate on driver shots and iron shots, and thus travels a greater distance. In addition, if the cover composition has a slab hardness of 80 or less, the obtained golf ball has better durability. Further, in case of a so-called spin golf ball which focuses on controllability, the cover composition preferably has a slab hardness of less than 50 in Shore D hardness, and preferably has a slab hardness of 20 or more, more preferably 25 or more, and even more preferably 30 or more in shore D hardness. If the cover composition has a slab hardness of less than 50 in Shore D hardness, the obtained golf ball readily stops on the green due to the high spin rate on approach shots. In addition, if the cover composition has a slab hardness of 20 or more in Shore D hardness, the abrasion resistance is enhanced. In case of a plurality of cover layers, the slab hardness of the cover composition constituting each layer may be identical or different.

In case of a plurality of cover layers, a reinforcing layer is preferably formed between the cover layers in order to enhance the adhesion between the cover layers. The reinforcing layer is formed from a reinforcing layer composition containing a resin component. As the resin component, a two-component curing type thermosetting resin is suitably used. Specific examples of the two-component curing type thermosetting resin include an epoxy resin, a urethane resin, an acrylic resin, a polyester resin and a cellulose resin. From the viewpoint of the strength and durability of the reinforcing layer, the two-component curing type epoxy resin and the two-component curing type urethane resin are preferable.

The reinforcing layer composition may contain an additive such as a coloring material (e.g. titanium dioxide), a phosphoric acid-based stabilizer, an antioxidant, a light stabilizer, a fluorescent brightener, an ultraviolet absorber, and an anti-blocking agent. The additive may be added in either of the base resin and the curing agent of the two-component curing type thermosetting resin.

[Construction of golf ball]

Specific examples of the golf ball include a one-piece golf ball; a two-piece golf ball composed of a spherical core and one cover layer covering the spherical core; a three-piece golf ball composed of a spherical core and two cover layers covering the spherical core; a multi-piece golf ball composed of a spherical core and three or more cover layers covering the spherical core; a three-piece golf ball composed of a spherical core composed of an inner core and an outer core, and one cover layer; a four-piece golf ball composed of a spherical core composed of an inner core and an outer core, and two cover layers; and a multi-piece golf ball composed of a spherical core composed of an inner core and an outer core, and three or more cover layers.

Examples of the preferable embodiment of the golf ball include a golf ball composed of a spherical core and at least one cover layer covering the spherical core, wherein at least a part of the spherical core is the cured product of the golf ball rubber composition (embodiment 1); and a golf ball composed of a spherical core and at least one cover layer covering the spherical core, wherein the spherical core is a dual layered core composed of an inner core and an outer core, and at least one of the inner core and the outer core is the cured product of the golf ball rubber composition (embodiment 2).

In the embodiment 1, the spherical core is preferably single layered. Unlike the multiple layered spherical core, the single layered spherical core does not have an energy loss at the interface of the multiple layered spherical core when being hit, and thus has better resilience. In the embodiment 2, the inner core is preferably composed of the cured product of the golf ball rubber composition.

The surface hardness (Hs) of the spherical core is 50 or more, and preferably 60 or more in Shore C hardness. If the surface hardness (Hs) is 50 or more in Shore C hardness, the spherical core is not excessively soft, and better resilience is obtained. In addition, if the surface hardness (Hs) is preferably 100 or less, more preferably 90 or less in Shore C hardness. If the surface hardness (Hs) is 100 or less in Shore C hardness, the spherical core is not excessively hard, and thus better shot feeling is obtained.

The center hardness (Ho) of the spherical core is preferably 40 or more, more preferably 45 or more, and even more preferably 50 or more, and is preferably 90 or less, more preferably 85 or less, and even more preferably 80 or less in Shore C hardness. If the center hardness (Ho) is 40 or more in Shore C hardness, the spherical core is not excessively soft, and thus better resilience is obtained, and if the center hardness (Ho) is 90 or less in Shore C hardness, the spherical core is not excessively hard, and thus better shot feeling is obtained.

The hardness difference (Hs-Ho) between the surface hardness (Hs) and the center hardness (Ho) of the spherical core is preferably 10 or more, more preferably 12 or more, and even more preferably 14 or more in Shore C hardness. If the hardness difference (Hs-Ho) is 10 or more in Shore C hardness, the spherical core has a greater outer-hard and inner-soft degree, and thus the obtained golf ball travels a greater flight distance on driver shots. In addition, the hardness difference (Hs-Ho) is preferably 40 or less, more preferably 35 or less, and even more preferably 30 or less in Shore C hardness. If the hardness difference (Hs-Ho) is 40 or less in Shore C hardness, the obtained golf ball has better shot feeling.

In the case that the spherical core is the dual layered core composed of the inner core and the outer core, the surface hardness (Hs1) of the inner core is preferably 60 or more, more preferably 65 or more, and is preferably 90 or less, more preferably 80 or less, and even more preferably 75 or less in Shore C hardness. If the surface hardness (Hs1) is 60 or more in Shore C hardness, the obtained golf ball has further enhanced resilience. If the surface hardness (Hs1) is 90 or less in Shore C hardness, the spherical core has a greater outer-hard and inner-soft degree and thus the obtained golf ball has enhanced resilience, and the obtained golf ball also has better shot feeling.

The center hardness (Ho) of the inner core is preferably 45 or more, more preferably 50 or more, and even more preferably 55 or more, and is preferably 90 or less, more preferably 80 or less, and even more preferably 70 or less in Shore C hardness. If the center hardness (Ho) is 45 or more in Shore C hardness, the obtained golf ball has further enhanced resilience. If the center hardness (Ho1) is 90 or less in Shore C hardness, the spherical core has a greater outer-hard and inner-soft degree and thus the obtained golf ball has enhanced resilience, and the obtained golf ball also has better shot feeling. It is noted that the center hardness (Ho) of the inner core as a whole is the center hardness of the spherical core.

The hardness difference (Hs1-Ho) between the surface hardness (Hs1) and the center hardness (Ho) of the inner core is preferably 5 or more, more preferably 7 or more, and even more preferably 9 or more, and is preferably 30 or less, more preferably 25 or less, and even more preferably 20 or less in Shore C hardness. If the hardness difference (Hs1-Ho) is 5 or more in Shore C hardness, the obtained golf ball has further enhanced resilience. If the hardness difference (Hs1-Ho) is 30 or less in Shore C hardness, the spherical core has a greater outer-hard and inner-soft degree and thus the obtained golf ball has enhanced resilience, and the obtained golf ball also has better shot feeling.

The diameter of the spherical core is preferably 34.8 mm or more, more preferably 36.8 mm or more, and even more preferably 38.8 mm or more, and is preferably 42.2 mm or less, more preferably 41.8 mm or less, even more preferably 41.2 mm or less, and most preferably 40.8 mm or less. If the diameter of the spherical core is 34.8 mm or more, the cover is not excessively thick, and thus the resilience is better. On the other hand, if the diameter of the spherical core is 42.2 mm or less, the cover is not excessively thin, and thus functions better.

In the case that the spherical core is the dual layered core composed of the inner core and the outer core, the diameter of the inner core is preferably 5 mm or more, more preferably 7 mm or more, and even more preferably 10 mm or more, and is preferably 25 mm or less, more preferably 22 mm or less, and even more preferably 20 mm or less. In addition, the thickness of the outer core is preferably 5 mm or more, more preferably 6 mm or more, and even more preferably 8 mm or more, and is preferably 20 mm or less, more preferably 18 mm or less, and even more preferably 15 mm or less.

When the spherical core has a diameter in a range of from 34.8 mm to 42.2 mm, the compression deformation amount (shrinking amount along the compression direction) of the spherical core when applying a load from 98 N as an initial load to 1275 N as a final load to the spherical core is preferably 2.0 mm or more, more preferably 2.8 mm or more, and is preferably 6.0 mm or less, more preferably 5.0 mm or less. If the compression deformation amount is 2.0 mm or more, the shot feeling is better, and if the compression deformation amount is 6.0 mm or less, the resilience is better.

In the golf ball, the cover preferably has at least one layer, and may have two or more layers. Specific examples of the multiple layered cover include an embodiment having an inner cover layer and an outer cover layer. The inner cover layer is preferably formed from a cover composition containing an ionomer resin. The outer cover layer is preferably formed from a cover composition containing an ionomer resin or polyurethane.

The thickness of the cover is preferably 4.0 mm or less, more preferably 3.0 mm or less, and even more preferably 2.0 mm or less. If the thickness of the cover is 4.0 mm or less, the obtained golf ball has better resilience or shot feeling. The thickness of the cover is preferably 0.3 mm or more, more preferably 0.5 mm or more, even more preferably 0.8 mm or more, and most preferably 1.0 mm or more. If the thickness of the cover is 0.3 mm or more, the cover has better durability or wear resistance. In the case that the golf ball comprises a plurality of cover layers, the total thickness of a plurality of cover layers preferably falls within the above range.

The golf ball preferably has a diameter in a range of from 40 mm to 45 mm. In light of satisfying the regulation of US Golf Association (USGA), the diameter is most preferably 42.67 mm or more. In light of prevention of air resistance, the diameter is more preferably 44 mm or less, and most preferably 42.80 mm or less. In addition, the golf ball according to the present invention preferably has a mass of 40 g or more and 50 g or less. In light of obtaining greater inertia, the mass is more preferably 44 g or more, and most preferably 45.00 g or more. In light of satisfying the regulation of USGA, the mass is most preferably 45.93 g or less.

When the golf ball has a diameter in a range of from 40 mm to 45 mm, the compression deformation amount (shrinking amount along the compression direction) of the golf ball when applying a load from an initial load of 98 N to a final load of 1275 N to the golf ball is preferably 2.0 mm or more, more preferably 2.4 mm or more, even more preferably 2.5 mm or more, and most preferably 2.6 mm or more, and is preferably 5.0 mm or less, more preferably 4.5 mm or less. If the compression deformation amount is 2.0 mm or more, the golf ball does not become excessively hard, and thus has better shot feeling. On the other hand, if the compression deformation amount is 5.0 mm or less, the golf ball has better resilience.

Concave portions called "dimples" are usually formed on the surface of the golf ball. The total number of dimples is preferably 200 or more and 500 or less. If the total number of dimples is less than 200, the dimple effect is hardly obtained. On the other hand, if the total number of dimples exceeds 500, the dimple effect is hardly obtained because the size of the respective dimple is small. The shape (shape in a plan view) of the formed dimples includes, without limitation, a circle; a polygonal shape such as a roughly triangular shape, a roughly quadrangular shape, a roughly pentagonal shape and a roughly hexagonal shape; and other irregular shape. These shapes may be employed solely, or at least two of them may be employed in combination.

A paint film or a mark may be formed on the golf ball. The thickness of the paint film is not particularly limited, and is preferably 5 μm or more, more preferably 7 μm or more, and is preferably 50 μm or less, more preferably 40 μm or less, and even more preferably 30 μm or less. If the thickness of the paint film is less than 5 μm, the paint film is easy to wear off due to the continued use of the golf ball, and if the thickness of the paint film exceeds 50 μm, the dimple effect is reduced and thus the flight performance of the golf ball may be lowered.

[Production method of golf ball]

(Single layered spherical core)

The single layered spherical core is obtained by molding a kneaded rubber composition in a mold. The molding temperature is preferably 120 °C or more, more preferably 150 °C or more, and even more preferably 160 °C or more, and is preferably 170 °C or less. If the molding temperature is higher than 170 °C, the surface hardness (Hs) of the core tends to be lowered. In addition, the molding pressure preferably ranges from 2.9 MPa to 11.8 MPa. The molding time preferably ranges from 10 minutes to 60 minutes.

(Multiple layered spherical core)

In the case that the spherical core is the multiple layered core, the outer core covering the inner core is formed after the inner core is produced. The inner core is obtained by molding a kneaded rubber composition in a mold. The molding temperature is preferably 120 °C or more, more preferably 150 °C or more, and even more preferably 160 °C or more, and is preferably 170 °C or less. If the molding temperature is higher than 170 °C, the surface hardness (Hs) of the core tends to be lowered. In addition, the molding pressure preferably ranges from 2.9 MPa to 11.8 MPa. The molding time preferably ranges from 10 minutes to 60 minutes.

Then, the outer core covering the inner core is formed. Examples of the method molding the outer core include a method which comprises molding the rubber composition into a hollow shell, covering the inner core with a plurality of the hollow shells and performing compression molding. Compression molding the rubber composition into half shells is conducted at a molding pressure of 1 MPa or more and 20 MPa or less and a molding temperature of 10 °C or more and 100 °C or less. Examples of the method using the half shells to mold the outer core include a method which comprises covering the inner core with two of the half shells and performing compression molding. Compression molding the half shells into the outer core is conducted at a molding pressure of 2 MPa or more and 25 MPa or less and a molding temperature of 100 °C or more and 200 °C or less. By performing the molding under the above conditions, the outer core having a uniform thickness is formed. When the spherical core has three or more layers, the production of the outer core is repeated.

(Cover)

Examples of the method molding the cover include a method which comprises molding the cover composition into a hollow shell, covering the core with a plurality of the hollow shells and performing compression molding (preferably a method which comprises molding the cover composition into a hollow half shell, covering the core with two of the half shells and performing compression molding); and a method which comprises injection molding the cover composition directly onto the core.

When molding the cover in a compression molding method, molding of the half shell can be performed by either the compression molding method or the injection molding method, and the compression molding method is preferred. Compression molding the cover composition into a half shell can be carried out, for example, under a pressure of 1 MPa or more and 20 MPa or less at a temperature of -20 °C or more and 70 °C or less relative to the flow beginning temperature of the cover composition. By performing the molding under the above conditions, the half shell having a uniform thickness can be formed. Examples of the method for molding the cover by using the half shell include a method which comprises covering the core with two of the half shells and then performing compression molding. Compression molding half shells into the cover can be carried out, for example, under a pressure of 0.5 MPa or more and 25 MPa or less at a temperature of -20 °C or more and 70 °C or less relative to the flow beginning temperature of the cover composition. By performing

the molding under the above conditions, the golf ball cover having a uniform thickness can be formed.

In the case of injection molding the cover composition into the cover, the cover composition extruded in a pellet form may be used for injection molding, or the cover materials such as the base resin components and the pigment may be dry blended, followed by directly injection molding the blended material. It is preferred to use upper and lower molds having a hemi-spherical cavity and pimples for forming the cover, wherein a part of the pimples also serves as a retractable hold pin. When molding the cover by injection molding, the hold pin is protruded to hold the core, the cover composition is charged and then cooled to obtain the cover. For example, the cover composition heated at a temperature ranging from 200 °C to 250 °C is charged into a mold held under a pressure of 9 MPa to 15 MPa for 0.5 to 5 seconds, and after cooling for 10 to 60 seconds, the mold is opened to obtain the cover.

The golf ball body having the cover formed thereon is ejected from the mold, and is preferably subjected to surface treatments such as deburring, cleaning and sandblast where necessary.

(Specific examples)

Fig. 1 is a partially cutaway cross-sectional view of a golf ball 2 according to the preferable embodiment 1 of the present invention. The golf ball 2 has a spherical core 4, and a cover 12 covering the spherical core 4. A plurality of dimples 14 are formed on the surface of the cover. Other portions than the dimples 14 on the surface of the golf ball 2 are lands 16. The golf ball 2 is provided with a paint layer and a mark layer on an outer side of the cover 12, but these layers are not depicted.

Fig. 2 is a partially cutaway cross-sectional view of a golf ball 2 according to the preferable embodiment 2 of the present invention. The golf ball 2 has a spherical core 4 composed of an inner core 3 and an outer core 5 covering the inner core 3, and a cover 12 covering the spherical core 4. A plurality of dimples 14 are formed on the surface of the cover 12. Other portions than the dimples 14 on the surface of the golf ball are lands 16. The golf ball is provided with a paint layer and a mark layer on an outer side of the cover, but these layers are not depicted.

## EXAMPLES

Next, the present invention will be described in detail by way of examples. However, the present invention is not limited to the examples described below. Various changes and modifications without departing from the spirit of the present invention are included in the scope of the present invention.

[Evaluation method]

(1) Hardness of cured product of rubber composition

Sheets with a thickness of 2 mm were produced by pressing the rubber composition at a temperature of 170 °C for 30 minutes. Three of these sheets were stacked on one another so as not to be affected by the measuring substrate on which the sheets were placed, and the hardness of the stack was measured with an automatic hardness tester (Digitest II, available from Bareiss company) using a detector of "Shore C".

(2) Loss tangent (tanδ)

Loss tangent (tanδ) was measured with a dynamic viscoelasticity measuring apparatus (Rheogel-E4000 available from UBM CO., Ltd.). A test sample was produced by pressing the rubber composition at a temperature of 170 °C for 30 minutes to produce a rubber plate, and punching the rubber plate to a determined size. The measurement was conducted under conditions of a temperature range: - 130 °C to 100 °C, a temperature increasing rate: 10 °C /min, a measuring interval: 3 °C, a frequency: 10 Hz, a jig: tensile mode, and a sample shape: 4 mm in width, 1 mm in thickness and 40 mm in length. Based on the viscoelasticity spectrum obtained by the dynamic viscoelasticity measurement, the tanδ at the temperatures of 0 °C and -80 °C was calculated, and the peak temperature of the tanδ was also obtained.

(3) Tensile elastic modulus

A tensile test described below was conducted for three test pieces and the obtained measuring values were averaged to calculate the tensile elastic modulus. The tensile test of the cured rubber product was performed based on JIS K6254 (2016).

Specifically, the rubber composition was kneaded with a kneading roll, and heat-treated at a temperature of 170 °C for 30 minutes, to produce a slab having a thickness of 2.0 mm. Three test pieces were punched from the slab. The shape of the test piece was a strip shape No. 4 (width: 15 mm, total length: 100 mm, thickness: 2.0 mm, distance

between gauge lines: 20 mm).

The tensile test was performed with a precision universal tester (AUTOGRAPH (registered trademark) AG-X plus available from Shimadzu Corporation). Testing temperature was 23 °C, interval between gauge lines was 20 mm, and moving speed of the gripper was 50 mm/min. In the tensile test, the test piece was elongated until the test piece was broken, tensile stress at each elongation was recorded, and tensile elastic modulus was calculated according to the following formula.

$$\text{Tensile elastic modulus} = (\sigma_{0.25}-\sigma_{0.05})/(0.0025-0.0005)$$

$\sigma_{0.25}$: tensile stress at 0.25% elongation
$\sigma_{0.05}$: tensile stress at 0.05% elongation

(4) Slab hardness of cover composition (Shore D hardness)

Sheets with a thickness of about 2 mm were produced by injection molding the cover composition. At least three of these sheets were stacked on one another so as not to be affected by the measuring substrate on which the sheets were placed, and the hardness of the stack was measured with an automatic hardness tester (Digitest II, available from Bareiss company) using a detector of "Shore D".

(5) Core hardness (Shore C hardness)

The hardness measured at the surface of the core was adopted as the surface hardness of the core. In addition, the core was cut into two hemispheres to obtain a cut plane, and the hardness measured at the central point of the cut plane was adopted as the center hardness of the core. The hardness was measured with an automatic hardness tester (Digitest II, available from Bareiss company) using a detector of "Shore C".

(6) Compression deformation amount (mm)

The deformation amount along the compression direction (shrinking amount along the compression direction) of the golf ball, when applying a load from an initial load of 98 N to a final load of 1275 N to the golf ball, was measured.

(7) Shot feeling

An actual hitting test was carried out by ten amateur golfers (high skilled person) using a driver or an approach wedge. Feeling at the shot was evaluated by each person based on the following standard. Major result of the evaluations of ten golfers was employed as the shot feeling of the golf ball.

Evaluation standard:

E (Excellent): Impact is low and feeling is good.
G (Good): there is impact but feeling is the good one.
F (Fair): Normal feeling.
P (Poor): Impact is great and feeling is poor.

[Cured product of rubber composition]

According to the formulations shown in Tables 1 and 2, the materials were extruded with a kneading roll to prepare the rubber compositions and the outer core rubber composition. In addition, evaluation results of the cured products of the rubber compositions are shown in Table 1.

Table 1

| Rubber composition No. | | | 1 | 2 | 3 | 4 | 5 | 6 | 7 | 8 | 9 | 10 |
|---|---|---|---|---|---|---|---|---|---|---|---|---|
| Formulation (parts by mass) | (a) | BR-730 | 100 | 100 | 100 | 100 | 100 | 100 | 100 | 100 | 100 | 100 |
| | (b) | ZDA | 25.5 | 25.5 | 26.5 | 27.5 | 22.5 | 30.5 | 17.5 | 30.5 | 26.5 | 33.5 |
| | (c) | DCP | 0.3 | 0.3 | 0.3 | 0.3 | 0.8 | 0.8 | 0.8 | 0.3 | 0.8 | 0.3 |
| | (d) | BHT | - | 0.1 | 0.5 | 1 | 1 | 1 | 1 | 3 | 5 | 5 |
| | (e) | DPDS | 0.5 | 0.5 | 0.5 | 0.5 | 0.5 | 0.5 | 0.5 | 0.5 | 0.5 | 0.5 |
| | (f) | Zinc oxide | 5 | 5 | 5 | 5 | 5 | 5 | 5 | 5 | 5 | 5 |
| | | Barium sulfate | Appropriate amount | Appropriate amount | Appropriate amount | Appropriate amount | Appropriate amount | Appropriate amount | Appropriate amount | Appropriate amount | Appropriate amount | Appropriate amount |
| Hardness (Shore C) | | | 65 | 64 | 63 | 63 | 64 | 74 | 54 | 61 | 62 | 59 |
| Peak temperature of tanδ (°C) | | | -94.0 | -93.5 | -91.1 | -90.8 | -88.0 | -90.1 | -86.0 | -93.3 | -88.0 | -93.9 |
| $tan\delta_{-80}$ | | | 0.414 | 0.462 | 0.471 | 0.484 | 0.528 | 0.418 | 0.618 | 0.470 | 0.497 | 0.488 |
| $tan\delta_0$ | | | 0.022 | 0.021 | 0.023 | 0.023 | 0.022 | 0.022 | 0.022 | 0.024 | 0.024 | 0.025 |
| Difference ($tan\delta_{-80}$ - $tan\delta_0$) | | | 0.393 | 0.441 | 0.449 | 0.461 | 0.506 | 0.396 | 0.596 | 0.446 | 0.473 | 0.464 |
| Product obtained by multiplying hardness by $tan\delta_{-80}$ | | | 26.8 | 29.5 | 29.6 | 30.4 | 33.6 | 30.8 | 33.4 | 28.9 | 30.7 | 28.6 |
| Product obtained by multiplying hardness by $tan\delta_0$ | | | 1.4 | 1.3 | 1.4 | 1.5 | 1.4 | 1.6 | 1.2 | 1.5 | 1.5 | 1.4 |
| Product obtained by multiplying hardness by difference ($tan\delta_{-80}$ - $tan\delta_0$) | | | 25.5 | 28.1 | 28.2 | 28.9 | 32.2 | 29.2 | 32.2 | 27.4 | 29.2 | 27.1 |
| Tensile elastic modulus (MPa) | | | 0.49 | 0.50 | 0.48 | 0.63 | 0.56 | 0.40 | 0.70 | 0.45 | 0.55 | 0.42 |

Table 2

| Outer core rubber composition | | |
|---|---|---|
| Formulation (parts by mass) | BR-730 | 100 |
| | ZDA | 34 |
| | DCP | 0.8 |
| | DPDS | 0.5 |
| | Zinc oxide | 5 |
| | Barium sulfate | Appropriate amount |

The materials used in Tables 1 and 2 are shown as follows.

BR-730: high-cis polybutadiene rubber (cis-1,4 bond amount = 95 mass%, 1,2-vinyl bond amount = 1.3 mass %, Moony viscosity ($ML_{1+4}$ (100°C)) = 55, molecular weight distribution (Mw/Mn) = 3) avaible from JSR Corporation
ZDA: zinc acrylate(ZN-DA90S) available from Nisshoku Techno Fine Chemical Co., Ltd.
DCP: Dicumyl peroxide available from Tokyo Chemical Industry Co., Ltd.
BHT: dibutylhydroxy toluene available from Tokyo Zairyo Co., Ltd.
DPDS: diphenyldisulfide available from Sumitomo Seika Chemicals Co., Ltd.
Zinc oxide: "Ginrei R" available from Toho Zinc Co., Ltd.
Barium sulfate: "Barium sulfate BD" available from Sakai Chemical Industry Co., Ltd.

[Cover composition]

According to the formulations shown in Table 3, the cover materials were extruded with a twin-screw kneading type extruder to prepare the cover compositions in a pellet form. The conditions for extruding the cover compositions were a screw diameter of 45 mm, a screw rotational speed of 200 rpm, and screw L/D = 35, and the mixture was heated to 150 to 230 °C at the die position of the extruder.

Table 3

| Cover composition No. | | a | b | c |
|---|---|---|---|---|
| Formulation (parts by mass) | Himilan 1605 | 50 | - | - |
| | Himilan 1706 | 50 | - | - |
| | Surlyn 8945 | - | 55 | - |
| | Himilan AM7329 | - | 45 | - |
| | Elastollan NY82A | - | - | 100 |
| | TINUVIN 770 | - | - | 0.2 |
| | Ultramarine Blue | - | - | 0.04 |
| | Titanium oxide | 4 | 3 | 4 |
| Slab hardness (Shore D) | | 65 | 65 | 29 |

The materials used in Table 3 are shown as follows.

Himilan (registered trademark) 1605: sodium ion-neutralized ethylene-methacrylic acid copolymerized ionomer resin available from Dow-Mitsui Polychemicals Co., Ltd.
Himilan 1706: zinc ion-neutralized ethylene-methacrylic acid copolymerized ionomer resin available from Dow-Mitsui Polychemicals Co., Ltd.
Surlyn (registered trademark) 8945: sodium ion-neutralized ethylene-methacrylic acid copolymerized ionomer resin available from E.I. du Pont de Nemours and Company.
Himilan AM7329: zinc ion-neutralized ethylene-methacrylic acid copolymerized ionomer resin available from Dow-Mitsui Polychemicals Co., Ltd.
Elastollan NY82A: thermoplastic polyurethane elastomer available from BASF Japan Ltd.
TINUVIN 770: bis(2,2,6,6-tetramethyl-4-piperidinyl) sebacate

[Production of two-piece golf ball]

(1) Production of core

According to the formulations shown in Tables 1 and 4, the rubber compositions were kneaded with a kneading roll, and heat pressed in upper and lower molds, each having a hemispherical cavity, at a temperature of 170 °C for 30 minutes to obtain a spherical core having a diameter of 39.7 mm. It is noted that an appropriate amount of barium sulfate was added such that the obtained golf ball had a mass of 45.3 g.

(2) Production of cover

The cover composition No.a was injection-molded on the above-obtained spherical core, to produce a golf ball (diameter: 42.7 mm) comprising the spherical core and the cover covering the spherical core. Evaluation results of the obtained golf balls are shown in Table 4.

Table 4

| Golf ball No. | | | 1 | 2 | 3 | 4 | 5 | 6 | 7 | 8 | 9 | 10 |
|---|---|---|---|---|---|---|---|---|---|---|---|---|
| Core | Rubber composition | No. | 1 | 2 | 3 | 4 | 5 | 6 | 7 | 8 | 9 | 10 |
| | | hardness (Shore C) | 65 | 64 | 63 | 63 | 64 | 74 | 54 | 61 | 62 | 59 |
| | | Peak temperature of tanδ (°C) | -94.0 | -93.5 | -91.1 | -90.8 | -88.0 | -90.1 | -86.0 | -93.3 | -88.0 | -93.9 |
| | | $\tan\delta_{-80}$ | 0.414 | 0.462 | 0.471 | 0.484 | 0.528 | 0.418 | 0.618 | 0.470 | 0.497 | 0.488 |
| | | $\tan\delta_{0}$ | 0.022 | 0.021 | 0.023 | 0.023 | 0.022 | 0.022 | 0.022 | 0.024 | 0.024 | 0.025 |
| | | Difference ($\tan\delta_{-80}$ - $\tan\delta_{0}$) | 0.393 | 0.441 | 0.449 | 0.461 | 0.506 | 0.396 | 0.596 | 0.446 | 0.473 | 0.464 |
| | | Product obtained by multiplying hardness by $\tan\delta_{-80}$ | 26.8 | 29.5 | 29.6 | 30.4 | 33.6 | 30.8 | 33.4 | 28.9 | 30.7 | 28.6 |
| | | Product obtained by multiplying hardness by $\tan\delta_{0}$ | 1.4 | 1.3 | 1.4 | 1.5 | 1.4 | 1.6 | 1.2 | 1.5 | 1.5 | 1.4 |
| | | Product obtained by multiplying hardness by difference ($\tan\delta_{-80}$ - $\tan\delta_{0}$) | 25.5 | 28.1 | 28.2 | 28.9 | 32.2 | 29.2 | 32.2 | 27.4 | 29.2 | 27.1 |
| | Surface hardness (Shore C) | | 70 | 69 | 68 | 68 | 69 | 80 | 60 | 66 | 69 | 64 |
| | Center hardness (Shore C) | | 56 | 55 | 56 | 57 | 55 | 65 | 45 | 58 | 57 | 58 |
| Cover | Formulation | | a | a | a | a | a | a | a | a | a | a |
| | Slab hardness (Shore D) | | 65 | 65 | 65 | 65 | 65 | 65 | 65 | 65 | 65 | 65 |
| | Thickness (mm) | | 1.5 | 1.5 | 1.5 | 1.5 | 1.5 | 1.5 | 1.5 | 1.5 | 1.5 | 1.5 |
| Evaluation | Compression deformation amount (mm) | | 3.4 | 3.4 | 3.4 | 3.4 | 3.4 | 3.0 | 4.0 | 3.5 | 3.4 | 3.5 |
| | Shot feeling | Driver shots | P | F | G | E | E | G | G | P | E | P |
| | | Approach shots | G | F | G | G | G | G | G | G | G | G |

These golf balls No.2 to 7 and 9 are cases that the spherical core thereof is composed of the cured product having the product (hardness × ($\tan\delta_{-80}$ - $\tan\delta_0$)) of 28.0 or more. These golf balls No.2 to 7 and 9 have excellent shot feeling on both driver shots and approach shots.

[Production of four-piece golf ball]

(1) Production of inner core

According to the formulations shown in Tables 1 and 5, the rubber compositions were kneaded with a kneading roll, and heat pressed in upper and lower molds, each having a hemispherical cavity, at a temperature of 170 °C for 20 minutes to obtain an inner core having a diameter of 20 mm. It is noted that an appropriate amount of barium sulfate was added such that the inner core had a mass of 4.8 g.

(2) Production of outer core

Half shells were molded from the outer core rubber composition. The outer core rubber composition was charged into each of the depressed part of the lower mold of a half shell molding mold, and a pressure was applied thereto to mold half shells. The compression molding was conducted under conditions: a molding temperature of 25 °C, a molding time of 3 minutes and a molding pressure of 15 MPa. The above-obtained inner core was covered with two of the half shells. The inner core and half shells were charged into a mold composed of upper and lower molds, each having a hemispherical cavity, and heat-pressed at predetermined conditions, to obtain dual layered spherical cores (thickness of outer core: 9.25 mm). It is noted that the amount of barium sulfate was adjusted such that the finally obtained golf ball had a mass of 45.6 g.

(3) Production of inner cover layer

The cover composition No.b was injection molded on the above-obtained dual layered core, to produce a spherical body comprising the dual layered core and the inner cover layer (thickness: 1.6 mm) covering the dual layered core.

(4) Production of reinforcing layer

A reinforcing layer composition (trade name "Polin (registered trademark) 750LE" available from Shinto Paint Co. Ltd.) having a two-component curing type epoxy resin as a base resin was prepared. The base material contains 30 parts by mass of a bisphenol A type solid epoxy resin and 70 parts by mass of a solvent. The curing agent contains 40 parts by mass of a modified polyamide amine, 5 parts by mass of titanium dioxide and 55 parts by mass of a solvent. The mass ratio of the base material to the curing agent was 1/1. The reinforcing layer composition was applied to the surface of the inner cover layer with an air gun and kept at an atmosphere of 23 °C for 12 hours, to form the reinforcing layer. The reinforcing layer had a thickness of 7 $\mu$m.

(5) Production of outer cover layer

The cover composition No.c in a pellet form was charged into each of the depressed part of the lower mold of a half shell molding mold, and a pressure was applied thereto to mold half shells. The spherical body having the reinforcing layer formed thereon was concentrically covered with two of the half shells. The spherical body and half shells were charged into a final mold provided with a plurality of pimples on the cavity surface. The cover (thickness: 0.5 mm) was formed by compression molding, and the golf ball bodies were obtained. A plurality of dimples having an inverted shape of the pimples were formed on the cover. Evaluation results of the obtained golf balls are shown in Table 5.

Table 5

| Golf ball No. | | | 11 | 12 | 13 | 14 | 15 | 16 | 17 | 18 | 19 | 120 |
|---|---|---|---|---|---|---|---|---|---|---|---|---|
| Inner core | Rubber composition | No. | 1 | 2 | 3 | 4 | 5 | 6 | 7 | 8 | 9 | 10 |
| | | Hardness (Shore C) | 65 | 64 | 63 | 63 | 64 | 74 | 54 | 61 | 62 | 59 |
| | | Peak temperature of tanδ (°C) | -94.0 | -93.5 | -91.1 | -90.8 | -88.0 | -90.1 | -86.0 | -93.3 | -88.0 | -93.9 |
| | | $\tan\delta_{-80}$ | 0.414 | 0.462 | 0.471 | 0.484 | 0.528 | 0.418 | 0.618 | 0.470 | 0.497 | 0.488 |
| | | $\tan\delta_0$ | 0.022 | 0.021 | 0.023 | 0.023 | 0.022 | 0.022 | 0.022 | 0.024 | 0.024 | 0.025 |
| | | Difference ($\tan\delta_{-80}$ - $\tan\delta_0$) | 0.393 | 0.441 | 0.449 | 0.461 | 0.506 | 0.396 | 0.596 | 0.446 | 0.473 | 0.464 |
| | | Product obtained by multiplying hardness by $\tan\delta_{-80}$ | 26.8 | 29.5 | 29.6 | 30.4 | 33.6 | 30.8 | 33.4 | 28.9 | 30.7 | 28.6 |
| | | Product obtained by multiplying hardness by $\tan\delta_0$ | 1.4 | 1.3 | 1.4 | 1.5 | 1.4 | 1.6 | 1.2 | 1.5 | 1.5 | 1.4 |
| | | Product obtained by multiplying hardness by difference ($\tan\delta_{-80}$ - $\tan\delta_0$) | 25.5 | 28.1 | 28.2 | 28.9 | 32.2 | 29.2 | 32.2 | 27.4 | 29.2 | 27.1 |
| | Surface hardness (Shore C) | | 70 | 69 | 68 | 68 | 69 | 80 | 60 | 66 | 69 | 64 |
| | Center hardness (Shore C) | | 61 | 60 | 61 | 62 | 60 | 65 | 45 | 60 | 58 | 60 |
| Outer core | Surface hardness (Shore C) | | 81 | 81 | 81 | 81 | 81 | 82 | 83 | 81 | 81 | 81 |
| Inner cover | Cover composition | | b | b | b | b | b | b | b | b | b | b |
| | Slab hardness (Shore D) | | 65 | 65 | 65 | 65 | 65 | 65 | 65 | 65 | 65 | 65 |
| | Thickness (mm) | | 1.6 | 1.6 | 1.6 | 1.6 | 1.6 | 1.6 | 1.6 | 1.6 | 1.6 | 1.6 |
| Outer cover | Cover composition | | C | C | C | C | C | C | C | C | C | C |
| | Slab hardness (Shore D) | | 29 | 29 | 29 | 29 | 29 | 29 | 29 | 29 | 29 | 29 |
| | Thickness (mm) | | 0.5 | 0.5 | 0.5 | 0.5 | 0.5 | 0.5 | 0.5 | 0.5 | 0.5 | 0.5 |
| Evaluation | Compression deformation amount (mm) | | 2.5 | 2.5 | 2.5 | 2.5 | 2.5 | 2.3 | 2.7 | 2.5 | 2.5 | 2.5 |
| | Shot feeling | Driver shots | P | G | G | E | E | G | G | P | E | P |
| | | Approach shots | F | F | G | G | G | G | G | G | G | F |

The golf balls No.12 to 17 and 19 are cases that the inner core thereof is composed of the cured product having the product (hardness × ($\tan\delta_{-80}$ - $\tan\delta_0$)) of 28.0 or more. These golf balls No.12 to 17 and 19 have excellent shot feeling on both driver shots and approach shots.

This application is based on Japanese patent application No. 2020-037235 filed on March 4, 2020, the contents of which are hereby incorporated by reference.

## Claims

1. A cured product of a golf ball rubber composition, wherein

   the golf ball rubber composition contains (a) a base rubber, (b) an α,β-unsaturated carboxylic acid having 3 to 8 carbon atoms and/or a metal salt thereof as a co-crosslinking agent, and (c) a crosslinking initiator, and
   a product (hardness × ($\tan\delta_{-80}$ - $\tan\delta_0$)) obtained by multiplying a slab hardness of the cured product of the golf ball rubber composition in Shore C hardness by a difference ($\tan\delta_{-80}$ - $\tan\delta_0$) between a loss tangent of the cured product of the golf ball rubber composition at the temperature of -80 °C ($\tan\delta_{-80}$) and a loss tangent of the cured product of the golf ball rubber composition at the temperature of 0 °C ($\tan\delta_0$) is 28.0 or more,
   wherein the golf ball rubber composition further contains (d) a hindered phenol-based compound, and
   wherein the golf ball rubber composition contains (d) the hindered phenol-based compound in an amount ranging from 0.3 part by mass to 5 parts by mass with respect to 100 parts by mass of (a) the base rubber.

2. The cured product of the golf ball rubber composition according to claim 1, wherein a product (hardness × ($\tan\delta_{-80}$)) obtained by multiplying the slab hardness of the cured product of the golf ball rubber composition in Shore C hardness by the loss tangent of the cured product of the golf ball rubber composition at the temperature of -80 °C ($\tan\delta_{-80}$) is 29.0 or more.

3. The cured product of the golf ball rubber composition according to claim 1 or 2, wherein the loss tangent has a peak temperature of -92 °C or more.

4. The cured product of the golf ball rubber composition according to any one of claims 1 to 3, wherein the cured product of the golf ball rubber composition has a tensile elastic modulus of 0.40 MPa or more.

5. The cured product of the golf ball rubber composition according to any one of claims 1 to 4, wherein the difference ($\tan\delta_{-80}$ - $\tan\delta_0$) of the cured product of the golf ball rubber composition ranges from 0.400 to 0.600, and a product (hardness × ($\tan\delta_0$)) obtained by multiplying the slab hardness of the cured product of the golf ball rubber composition in Shore C hardness by the loss tangent of the cured product of the golf ball rubber composition at the temperature of 0 °C ($\tan\delta_0$) ranges from 0.6 to 6.0.

6. The cured product of the golf ball rubber composition according to any one of claims 1 to 5, wherein the loss tangent of the cured product of the golf ball rubber composition at the temperature of -80 °C ($\tan\delta_{-80}$) ranges from 0.420 to 0.600, and the loss tangent of the cured product of the golf ball rubber composition at the temperature of 0 °C ($\tan\delta_0$) ranges from 0.010 to 0.10.

7. The cured product of the golf ball rubber composition according to any one of claims 1 to 6, wherein the slab hardness of the cured product of the golf ball rubber composition ranges from 50 to 90 in Shore C hardness.

8. A golf ball comprising a spherical core and at least one cover layer covering the spherical core, wherein at least a part of the spherical core is composed of the cured product of the golf ball rubber composition according to any one of claims 1 to 7.

9. The golf ball according to claim 8, wherein the spherical core is a dual layered core composed of an inner core and an outer core, and at least one of the inner core and the outer core is composed of the cured product of the golf ball rubber composition.

10. The golf ball according to claim 9, wherein the inner core is composed of the cured product of the golf ball rubber composition.

11. The golf ball according to any one of claims 8 to 10, wherein the golf ball has two or more cover layers.

**12.** The golf ball according to claim 11, wherein the golf ball has two cover layers composed of an inner cover layer and an outer cover layer.

## Patentansprüche

**1.** Gehärtetes Erzeugnis einer Golfball-Kautschukzusammensetzung, wobei

die Golfball-Kautschukzusammensetzung enthält: (a) einen Basiskautschuk, (b) eine $\alpha,\beta$-ungesättigte Carbonsäure mit 3 bis 8 Kohlenstoffatomen und/oder ein Metallsalz derselben als ein Co-Vernetzungsmittel und (c) einen Vernetzungsinitiator, und

ein durch Multiplizieren einer Plattenhärte des gehärteten Produkts der Golfball-Kautschukzusammensetzung in Shore-C-Härte mit einer Differenz ($\tan\delta_{-80}$ - $\tan\delta_0$) zwischen einem Verlusttangens des gehärteten Produkts der Golfball-Kautschukzusammensetzung bei der Temperatur von -80°C ($\tan\delta_{-80}$) und einem Verlusttangens des gehärteten Erzeugnisses der Golfball-Kautschukzusammensetzung bei der Temperatur von 0°C ($\tan\delta_0$) erhaltenes Produkt (Härte $\times$ ($\tan\delta_{-80}$ - $\tan\delta_0$)) 28,0 oder mehr beträgt,

wobei die Golfball-Kautschukzusammensetzung zudem (d) eine gehinderte Phenol-basierte Verbindung enthält, und

wobei die Golfball-Kautschukzusammensetzung (d) die gehinderte Phenol-basierte Verbindung in einer Menge enthält, die in einem Bereich von 0,3 Massenteilen bis 5 Massenteilen liegt, bezogen auf 100 Massenteile (a) des Basiskautschuks.

**2.** Gehärtetes Erzeugnis der Golfball-Kautschukzusammensetzung nach Anspruch 1, wobei ein durch Multiplizieren der Plattenhärte des gehärteten Erzeugnisses der Golfball-Kautschukzusammensetzung in Shore-C-Härte mit dem Verlusttangens des gehärteten Erzeugnisses der Golfball-Kautschukzusammensetzung bei der Temperatur von -80°C ($\tan\delta_{-80}$) erhaltenes Produkt (Härte $\times$ ($\tan\delta_{-80}$)) 29,0 oder mehr beträgt.

**3.** Gehärtetes Erzeugnis der Golfball-Kautschukzusammensetzung nach Anspruch 1 oder 2, wobei der Verlusttangens eine Peak-Temperatur von -92°C oder mehr aufweist.

**4.** Gehärtetes Erzeugnis der Golfball-Kautschukzusammensetzung nach einem der Ansprüche 1 bis 3, wobei das gehärtete Erzeugnis der Golfball-Kautschukzusammensetzung einen Zugelastizitätsmodul von 0,40 MPa oder mehr aufweist.

**5.** Gehärtetes Erzeugnis der Golfball-Kautschukzusammensetzung nach einem der Ansprüche 1 bis 4, wobei die Differenz ($\tan\delta_{-80}$ - $\tan\delta_0$) des gehärteten Erzeugnisses der Golfball-Kautschukzusammensetzung im Bereich von 0,400 bis 0,600 liegt, und ein durch Multiplizieren der Plattenhärte des gehärteten Erzeugnisses der Golfball-Kautschukzusammensetzung in Shore-C-Härte mit dem Verlusttangens des gehärteten Erzeugnisses der Golfball-Kautschukzusammensetzung bei der Temperatur von 0°C ($\tan\delta_0$) erhaltenes Produkt (Härte $\times$ ($\tan\delta_0$)) im Bereich von 0,6 bis 6,0 liegt.

**6.** Gehärtetes Erzeugnis der Golfball-Kautschukzusammensetzung nach einem der Ansprüche 1 bis 5, wobei der Verlusttangens des gehärteten Erzeugnisses der Golfball-Kautschukzusammensetzung bei der Temperatur von -80°C ($\tan\delta_{-80}$) im Bereich von 0,420 bis 0,600 liegt, und der Verlusttangens des gehärteten Erzeugnisses der Golfball-Kautschukzusammensetzung bei der Temperatur von 0°C ($\tan\delta_0$) im Bereich von 0,010 bis 0,10 liegt.

**7.** Gehärtetes Erzeugnis der Golfball-Kautschukzusammensetzung nach einem der Ansprüche 1 bis 6, wobei die Plattenhärte des gehärteten Erzeugnisses der Golfball-Kautschukzusammensetzung in Shore-C-Härte im Bereich von 50 bis 90 liegt.

**8.** Golfball, der einen kugelförmigen Kern und mindestens eine den kugelförmigen Kern bedeckende Deckschicht umfasst, wobei zumindest ein Teil des kugelförmigen Kerns mit dem gehärteten Erzeugnis der Golfball-Kautschukzusammensetzung nach einem der Ansprüche 1 bis 7 aufgebaut ist.

**9.** Golfball nach Anspruch 8, wobei der kugelförmige Kern ein zweilagiger, mit einem inneren Kern und einem äußeren Kern aufgebauter Kern ist, und mindestens einer von dem inneren Kern und dem äußeren Kern mit dem gehärteten Erzeugnis der Golfball-Kautschukzusammensetzung aufgebaut ist.

**10.** Golfball nach Anspruch 9, wobei der innere Kern mit dem gehärteten Erzeugnis der Golfball-Kautschukzusammensetzung aufgebaut ist.

**11.** Golfball nach einem der Ansprüche 8 bis 10, wobei der Golfball zwei oder mehr Deckschichten aufweist.

**12.** Golfball nach Anspruch 11, wobei der Golfball zwei mit einer inneren Deckschicht und einer äußeren Deckschicht aufgebaute Deckschichten aufweist.

## Revendications

**1.** Produit durci d'une composition de caoutchouc pour balle de golf, dans lequel

la composition de caoutchouc pour balle de golf contient (a) un caoutchouc de base, un acide carboxylique $\alpha,\beta$-insaturé ayant 3 à 8 atomes de carbone et/ou un de ses sels métalliques et un agent de co-réticulation et (c) un initiateur de réticulation et

un produit (dureté $\times$ ($\tan\delta_{-80}$ - $\tan\delta_0$)) obtenu en multipliant une dureté de bloc du produit durci de la composition de caoutchouc pour balle de golf en dureté Shore C par une différence ($\tan\delta_{-80}$ - $\tan\delta_0$) entre une tangente de perte du produit durci de la composition de caoutchouc pour balle de golf à la température de -80 °C ($\tan\delta_{-80}$) et une tangente de perte du produit durci de la composition de caoutchouc pour balle de golf à la température de 0 °C ($\tan\delta_0$) est de 28,0 ou plus,

dans lequel la composition de caoutchouc pour balle de golf contient en outre (d) un composé à base de phénol bloqué et

dans lequel la composition de caoutchouc pour balle de golf contient (d) le composé à base de phénol bloqué en une quantité située dans la plage allant de 0,3 partie en masse à 5 parties en masse par rapport à 100 parties en masse du (a) caoutchouc de base.

**2.** Produit durci de la composition de caoutchouc pour balle de golf selon la revendication 1, dans lequel un produit (dureté $\times$ ($\tan\delta_{-80}$)) obtenu en multipliant la dureté de bloc du produit durci de la composition de caoutchouc pour balle de golf en dureté Shore C par la tangente de perte du produit durci de la composition de caoutchouc pour balle de golf à la température de -80 °C ($\tan\delta_{-80}$) étant de 29,0 ou plus.

**3.** Produit durci de la composition de caoutchouc pour balle de golf selon la revendication 1 ou 2, dans lequel la tangente de perte a une température de pic de -92 °C ou plus.

**4.** Produit durci de la composition de caoutchouc pour balle de golf selon l'une quelconque des revendications 1 à 3, dans lequel le produit durci de la composition de caoutchouc pour balle de golf a un module élastique à la traction de 0,40 MPa ou plus.

**5.** Produit durci de la composition de caoutchouc pour balle de golf selon l'une quelconque des revendications 1 à 4, dans lequel la différence ($\tan\delta_{-80}$-$\tan\delta_0$) du produit durci de la composition de caoutchouc pour balle de golf se situe dans la plage de 0,400 à 0,600 et un produit (dureté $\times$ ($\tan\delta_0$)) obtenu en multipliant la dureté de bloc du produit durci de la composition de caoutchouc pour balle de golf en dureté Shore C par la tangente de perte du produit durci de la composition de caoutchouc pour balle de golf à la température de 0 °C ($\tan\delta_0$) se situe dans la plage de 0,6 à 6,0.

**6.** Produit durci de la composition de caoutchouc pour balle de golf selon l'une quelconque des revendications 1 à 5, dans lequel la tangente de perte du produit durci de la composition de caoutchouc pour balle de golf à la température de -80 °C ($\tan\delta_{-80}$) se situe dans la plage de 0,420 à 0,600 et la tangente de perte du produit durci de la composition de caoutchouc pour balle de golf à la température de 0 °C ($\tan\delta_0$) se situe dans la plage de 0,010 à 0,10.

**7.** Produit durci de la composition de caoutchouc pour balle de golf selon l'une quelconque des revendications 1 à 6, dans lequel la dureté de bloc du produit durci de la composition de caoutchouc pour balle de golf se situe dans la plage de 50 à 90 en dureté Shore C.

**8.** Balle de golf comprenant un coeur sphérique et au moins une couche de couverture recouvrant le coeur sphérique, dans laquelle au moins une partie du coeur sphérique est composée du produit durci de la composition de caoutchouc pour balle de golf selon l'une quelconque des revendications 1 à 7.

9. Balle de golf selon la revendication 8, dans laquelle le coeur sphérique est un coeur à double couche composé d'un coeur interne et d'un coeur externe et au moins un du coeur interne et du coeur externe est composé du produit durci de la composition de caoutchouc pour balle de golf.

10. Balle de golf selon la revendication 9, dans laquelle le coeur interne est composé du produit durci de la composition de caoutchouc pour balle de golf.

11. Balle de golf selon l'une quelconque des revendications 8 à 10, dans laquelle la balle de golf a deux ou plus de deux couches de couverture.

12. Balle de golf selon la revendication 11, dans laquelle la balle de golf a deux couches de couverture composées d'une couche de couverture interne et d'une couche de couverture externe.

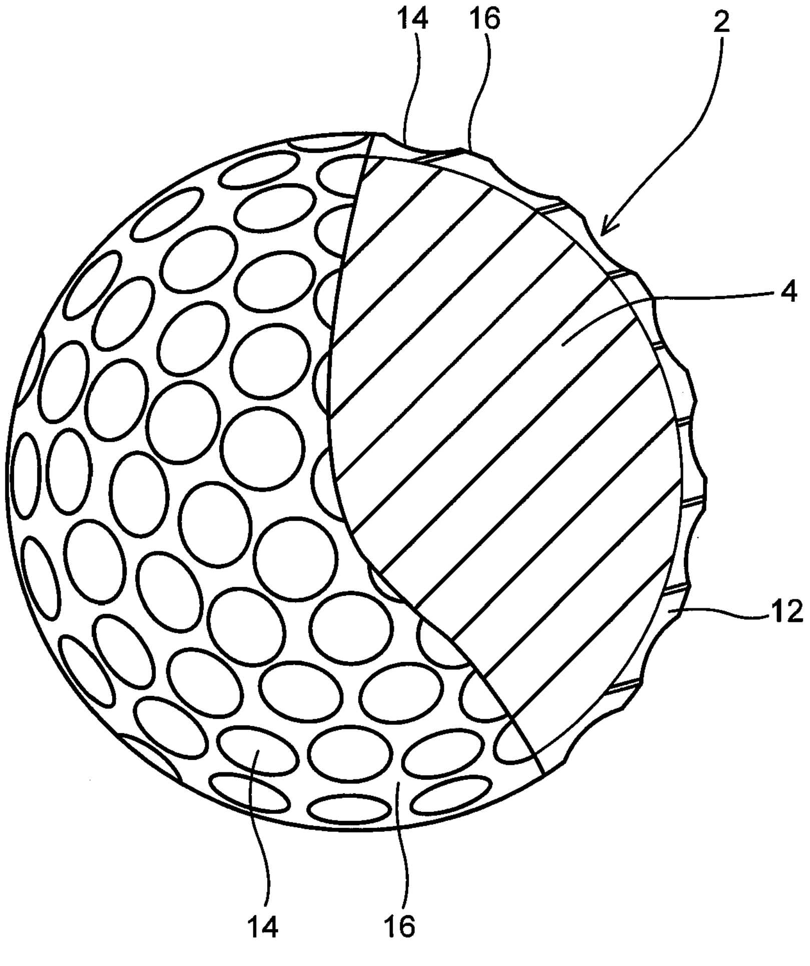


Fig. 1

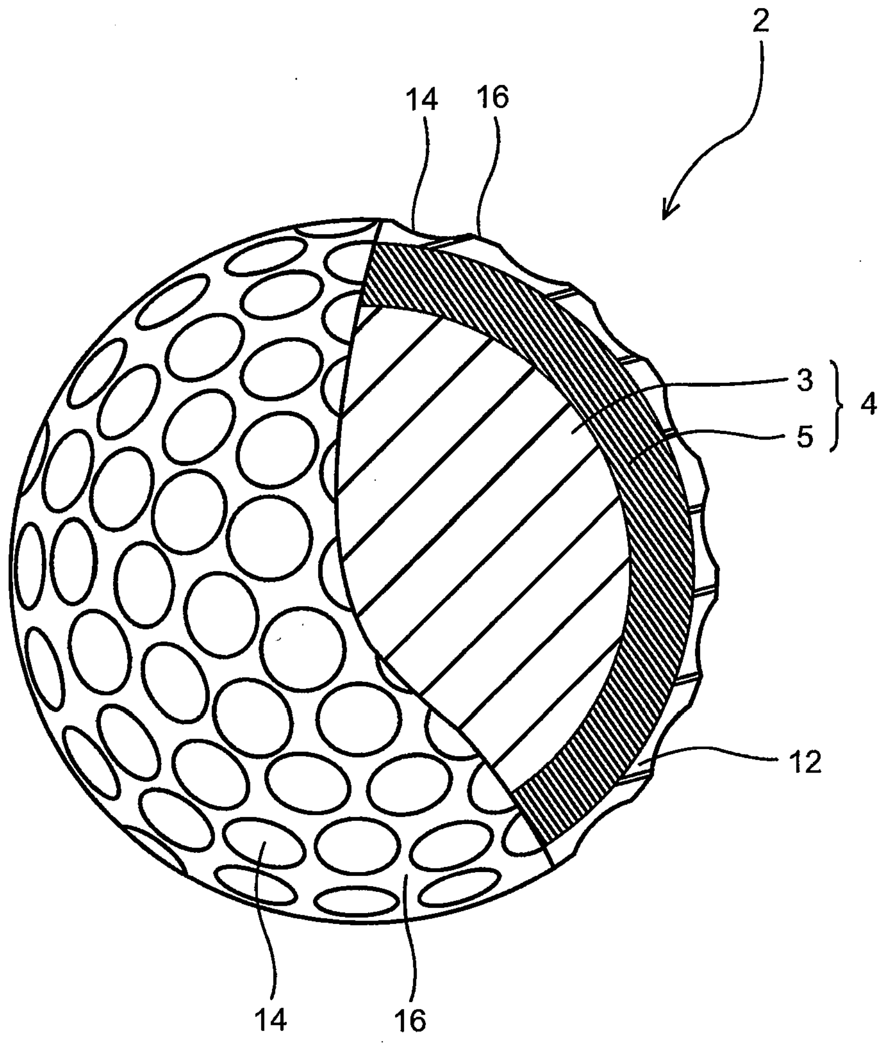


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016019620 A
- JP S6354181 A
- JP 2008126062 A
- JP H07155403 A
- EP 3603754 A2
- EP 3603755 A1
- US 2012252604 A1
- EP 3329972 A1
- US 2016136484 A1
- EP 3088052 A1
- US 2012172150 A1
- US 6291592 B1
- JP 2020037235 A